# EUROPEAN PATENT SPECIFICATION

(11) **EP 3 749 164 B1**
(45) Date of publication and mention of the grant of the patent: **08.01.2025**
(21) Application number: 19747370.5
(22) Date of filing: 30.01.2019
(51) Int. Cl.: A47L 9/28, A47L 7/02, B60G 15/00, B60G 17/00

(54) **CLEANER**
REINIGER
APPAREIL DE NETTOYAGE

(30) Priority: 05.02.2018 KR 20180014158
(43) Date of publication of application: 16.12.2020
(73) Proprietor: LG Electronics Inc., Yeongdeungpo-gu Seoul 07336 (KR)
(72) Inventor: LEE, Seungjin, Seoul 08592 (KR); LEE, Sangik, Seoul 08592 (KR); KIM, Sangjo, Seoul 08592 (KR)
(74) Representative: Vossius & Partner Patentanwälte Rechtsanwälte mbB
(86) International application number: PCT/KR2019/001251
(87) International publication number: WO 2019/151753

(56) References cited:
- JP-A- 2000 202 792
- JP-A- 2009 066 391
- JP-A- 2016 051 342
- JP-A- 2016 051 342
- KR-A- 20150 107 234
- KR-B1- 101 018 720

## Description

### Technical Field

The present invention relates to a cleaner, and more particularly to a cleaner that is capable of selectively performing automatic cleaning or manual cleaning.

### Background Art

In general, a cleaner includes a cleaner body, which is provided with a suction unit and a dust container, and a cleaning nozzle, which is connected to the cleaner body and performs cleaning while contacting an area to be cleaned.

The cleaner is classified into a manual cleaner, with which a user manually performs cleaning of an area to be cleaned, and an automatic cleaner that performs cleaning while traveling autonomously on an area to be cleaned.

In the case of a manual cleaner, suction force is generated in a suction unit by the power of an electric motor. In this state, if a user grips a cleaning nozzle or a cleaner body with the hand and puts the cleaning nozzle on an area to be cleaned, foreign substances such as dust present on the area to be cleaned are sucked into the cleaning nozzle by the suction force, and the sucked foreign substances are collected in a dust container. In this way, the cleaning operation of the manual cleaner is performed.

In the case of an automatic cleaner, in addition to the suction unit and the dust container, an ultrasonic sensor and/or a camera sensor is mounted to a cleaner body. While the cleaner body travels autonomously on an area to be cleaned using the aforementioned sensor, foreign substances present on the area to be cleaned are sucked into the cleaning nozzle by the suction force generated in the suction unit, and the sucked foreign substances are collected in the dust container. In this way, the cleaning operation of the automatic cleaner is performed.

The cleaning nozzle of the manual cleaner is moved and brought into close contact with an area to be cleaned by a user, whereas the cleaning nozzle of the automatic cleaner is coupled to the cleaner body so as to be brought into close contact with an area to be cleaned.

Each of the manual cleaner and the automatic cleaner further includes wheels, which are mounted to the cleaner body and by which the cleaner body can move. Wheels mounted to the manual cleaner enable a user to easily pull the cleaner body placed on an area to be cleaned while performing cleaning. Wheels mounted to the automatic cleaner are rotated by the drive force generated in an electric motor, whereby the cleaner body can travel autonomously.

Recently, cleaners capable of selectively performing automatic cleaning or manual cleaning have been actively developed. Regardless of whether a cleaner is configured to perform only automatic cleaning or is capable of selectively performing automatic cleaning or manual cleaning, when the cleaner is operated in an automatic cleaning mode, the cleaning nozzle is maintained in close contact with an area to be cleaned while the cleaner body is traveling. However, the state of the area to be cleaned, on which the cleaner travels, can vary greatly, which has a great influence on the traveling performance of the cleaner.

For example, in the case in which the floor of a living room is covered with a carpet, fibers of the carpet may be drawn into a suction port by the suction force of the cleaning nozzle, and this suction force applied between the carpet and the suction port may prevent the cleaner from traveling smoothly. In addition, when the cleaner is operated in an automatic cleaning mode and is traveling on a carpet, the wheels may slip due to the fibers of the carpet, whereby the cleaner may not travel normally. Furthermore, the cleaning nozzle may be stuck in the carpet, and thus a large amount of friction may be generated between the cleaning nozzle and the carpet, whereby the cleaner may not travel normally.

The cleaner is further equipped with a battery for storing electrical energy. In the case of a recently developed cleaner, when the state of charge of the battery drops below a predetermined level during an automatic cleaning mode, the cleaner travels autonomously to a charging stand and is automatically docked with the charging stand so that the battery is charged.

In particular, in the case of a cleaner capable of selectively performing automatic cleaning or manual cleaning, the charging stand charges the battery using a high voltage of 72V. Therefore, for safety reasons, the charging stand is configured such that the charging terminals thereof are not exposed at normal times and are exposed only when the cleaner is docked therewith. For this reason, it is very important for a cleaner, which is configured to selectively perform automatic cleaning and manual cleaning, to be docked with the charging stand automatically and securely.

In order to adjust the suction force of the cleaning nozzle with respect to an area to be cleaned and to allow the cleaner body to be automatically docked with the charging stand, which charges the battery using a high voltage of 72V, the cleaner body must be configured to ascend or descend.

A conventional cleaner is configured such that a wheel unit including wheels ascends or descends and consequently a cleaner body, to which the wheel unit is mounted, ascends or descends. In other words, if the wheel unit ascends or descends in the state in which the wheels are supported by an area to be cleaned, e.g. a floor, the cleaner body ascends or descends along with the vertical movement of the wheel unit.

In the case in which the cleaner is equipped with a suspension unit for absorbing shocks applied to the wheel unit, the wheel unit is mounted to the suspension unit so as to be vertically movable. However, when the wheel unit ascends or descends in order to move the cleaner body upwards or downwards, the shock-absorbing performance of the suspension unit is degraded.

JP 2016/051342 A relates to a vacuum cleaner having a detection switch detecting a protrusion state of a driving wheel with respect to a lower portion of a main body case by on and off of a switch main body being switched by rotation of a detection arm. A lever is provided in a rotatable manner and rotates the detection arm by rotation. A spring holds the detection arm at a position where the switch main body is switched to any of on and off by biasing the lever in a rotation direction. A lever section switches on and off of the switch main body of the detection switch by the lever rotating the detection arm by a driving wheel unit rotating in a downward direction and being positioned at a predetermined rotation position being rotated against bias of the spring.

### Disclosure of Invention

### Technical Problem

An object of the present invention is to provide a cleaner in which a cleaner body is configured to be ascendable and descendable with respect to a suspension unit provided to absorb shocks applied to a wheel unit, thereby enabling the suspension unit to continuously absorb shocks even when the height of the cleaner body is adjusted.

Another object of the present invention is to provide a cleaner in which, when a cleaner body provided at the bottom surface thereof with a charging terminal is docked with an external docking device in order to charge a battery provided inside the cleaner body, the cleaner body ascends so that the charging terminal is located at a position enabling connection to the docking device.

A further object of the present invention is to provide a cleaner in which, when a cleaning nozzle having a suction port formed in the bottom surface thereof cleans a carpet, the cleaning nozzle ascends so as to prevent fibers of the carpet from being drawn into the suction port.

A further object of the present invention is to provide a cleaner in which, when an ascending/descending unit for allowing a cleaner body to ascend or descend is mounted to a suspension unit, the overall widths of the ascending/descending unit and the suspension unit are decreased, thereby securing space for disposing the ascending/descending unit in the cleaner body.

However, objects to be accomplished by the invention are not limited to the above-mentioned objects, and other objects not mentioned will be clearly understood by those skilled in the art from the following description.

### Solution to Problem

The invention is specified by the independent claim. Preferred embodiments are defined in the dependent claims. In accordance with the present invention, the above and other objects can be accomplished by the provision of a cleaner including a cleaner body, a wheel unit including a wheel configured to support the cleaner body so that the cleaner body travels on an area to be cleaned, a suspension unit, to which the wheel unit is mounted so as to be movable vertically, the suspension unit being configured to absorb shocks when the wheel unit moves vertically, and an ascending/descending unit mounted to the suspension unit so as to be ascendable and descendable and coupled to the cleaner body so as to ascend or descend together with the cleaner body.

The ascending/descending unit includes an ascending/descending drive motor, a first rotary bar configured to be rotated by torque of the ascending/descending drive motor, and at least one second rotary bar arranged perpendicular to the first rotary bar so as to be rotated by rotational force of the first rotary bar, the second rotary bar being mounted to the suspension unit so that the cleaner body ascends or descends along with rotation of the second rotary bar.

The ascending/descending unit may further include an ascending/descending housing in which the first rotary bar and the second rotary bar are rotatably mounted, the ascending/descending housing being coupled to the cleaner body so as to ascend or descend together with the second rotary bar.

The first rotary bar may be accommodated in the ascending/descending housing, and the second rotary bar may have one end portion protruding from the inside of the ascending/descending housing to the outside of the ascending/descending housing and inserted into the suspension unit.

The suspension unit may have therein an insertion hole, into which the one end portion of the second rotary bar is mounted via insertion, and threads formed in the inner circumferential surface of the insertion hole, and the second rotary bar may have threads formed in the outer circumferential surface of the one end portion of the second rotary bar so as to be meshed with the threads formed in the insertion hole.

The suspension unit may include a suspension frame, a guide bar mounted to the suspension frame so as to extend vertically, the wheel unit being mounted to the guide bar so as to be movable vertically, and an elastic member through which the guide bar passes, the elastic member being configured to absorb shocks when the wheel unit moves vertically. The insertion hole may be formed in the suspension frame.

The suspension unit may further include an insulator in which the insertion hole is formed, the insulator being coupled to the suspension frame.

The suspension frame may have therein an ascending/descending hole into which the ascending/descending drive motor is inserted, and the ascending/descending drive motor may be disposed outside the ascending/descending housing, and may ascend or descend within the ascending/descending hole when the ascending/descending unit ascends or descends.

The suspension frame may have a stepped portion formed such that a lower portion of a surface of the suspension frame that faces the interior of the cleaner body protrudes further than an upper portion thereof, and a portion of the ascending/descending housing, through which the second rotary bar protrudes to the outside of the ascending/descending housing, may be seated on the stepped portion when the ascending/descending unit descends.

The ascending/descending unit may further include a plurality of bearings for allowing the first rotary bar and the second rotary bar to be rotatably coupled to the ascending/descending housing.

The ascending/descending unit may further include a first worm disposed at a rotary shaft of the ascending/descending drive motor, a first worm wheel disposed at the first rotary bar and tooth-engaged with the first worm, a second worm disposed at the first rotary bar, and a second worm wheel disposed at the second rotary bar and tooth-engaged with the second worm.

The first worm wheel and the second worm may be formed integrally with the first rotary bar.

The second worm wheel may be formed integrally with the second rotary bar.

The at least one second rotary bar may include a plurality of second rotary bars, and the second rotary bars may be arranged parallel to each other.

The first rotary bar may be arranged in the horizontal direction, and the second rotary bar may be arranged in the vertical direction.

The cleaner may further include a sensing unit including at least one of an obstacle sensor, a floor sensor, or a position sensor, and a controller configured to perform control in response to sensed values transmitted from the sensing unit so that the ascending/descending unit ascends or descends.

The cleaner may further include a charging terminal having a predetermined configuration enabling connection to an external docking device for charging and disposed on the bottom surface of the cleaner body. When the cleaner body intends to be docked with the docking device, the controller may perform control such that the ascending/ descending unit ascends so that the cleaner body is moved upwards.

After the ascending/descending unit ascends, the controller may perform control such that the ascending/descending unit descends so that the cleaner body is moved downwards and the charging terminal is connected to the docking device.

The cleaner may further include a cleaning nozzle coupled to the cleaner body and having a suction port formed in the bottom surface thereof to suck foreign substances from an area to be cleaned. Upon determining that the area to be cleaned is a carpet based on information about the area to be cleaned sensed by the floor sensor, the controller may perform control such that the ascending/descending unit ascends so that the cleaning nozzle is moved upwards.

Upon determining that the cleaner body has left the carpet based on the information about the area to be cleaned, the controller may perform control such that the ascending/descending unit descends so that the cleaning nozzle is moved downwards.

### Brief Description of Drawings

The above and other objects, features and other advantages of the present invention will be more clearly understood from the following detailed description taken in conjunction with the accompanying drawings, in which:
FIG. 1 is a perspective view illustrating a cleaner according to an embodiment of the present invention;
FIG. 2 is a view illustrating the cleaner from which a dust container depicted in FIG. 1 is separated;
FIG. 3 is a front view illustrating a wheel unit depicted in FIGs. 1 and 2, a suspension unit coupled to the wheel unit, and an ascending/descending unit mounted to the suspension unit;
FIG. 4 is a front perspective view of FIG. 3, from which a wheel cover and a travel belt are removed;
FIG. 5 is a rear perspective view of FIG. 4, which illustrates the state in which the ascending/descending unit is moved to the lowermost position;
FIG. 6 is a rear perspective view of FIG. 4, which illustrates the state in which the ascending/descending unit is moved to the uppermost position;
FIG. 7 is a view illustrating the configuration of an ascending/descending housing depicted in FIGs. 3 to 6;
FIG. 8 is a view illustrating the state in which the cleaner according to the embodiment of the present invention is docked with an external docking device; and
FIG. 9 is a control block diagram of the cleaner according to the embodiment of the present invention.

### Best Mode for Carrying out the Invention

Advantages and features of the present invention and methods for achieving them will be made clear from embodiments described below in detail with reference to the accompanying drawings. The present invention may, however, be embodied in many different forms, and should not be construed as being limited to the embodiments set forth herein. Rather, these embodiments are provided so that this disclosure will be thorough and complete, and will fully convey the scope of the invention to those skilled in the art. The present invention is defined only by the scope of the claims. Throughout the specification, the same reference numerals represent the same components.

Hereinafter, a cleaner according to an embodiment of the present invention will be described with reference to the accompanying drawings.

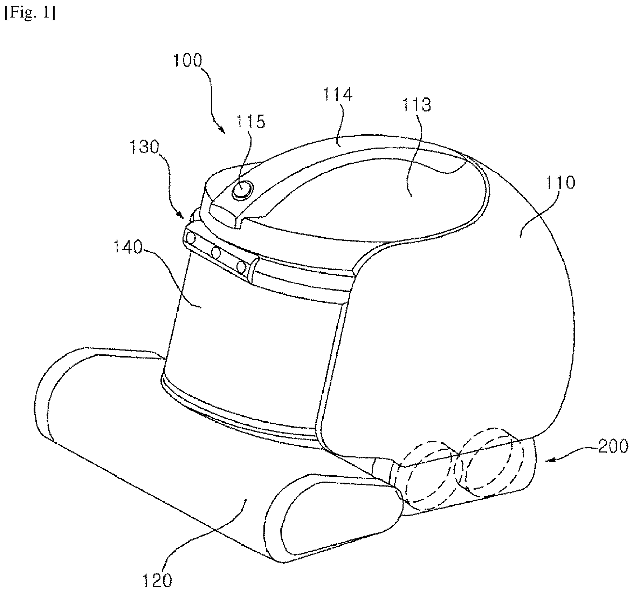

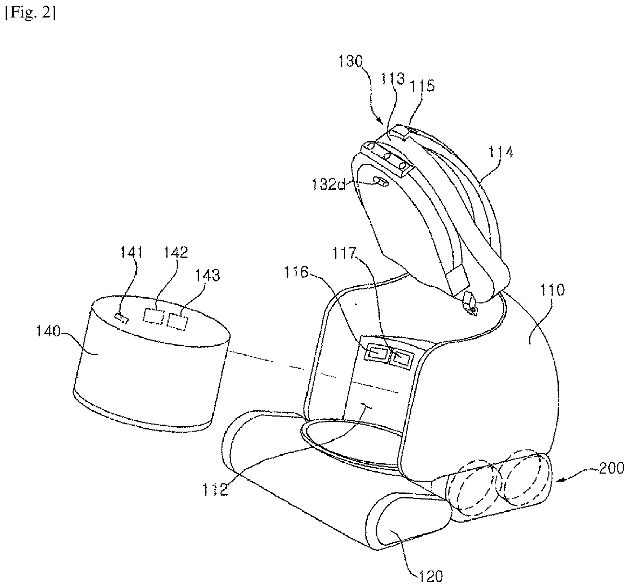

FIG. 1 is a perspective view illustrating a cleaner according to an embodiment of the present invention, and FIG. 2 is a view illustrating the cleaner from which a dust container depicted in FIG. 1 is separated.

Referring to FIGs. 1 and 2, a cleaner 100 includes a cleaner body 110, a cleaning nozzle 120, a sensing unit 130, and a dust container 140.

The cleaner 100 further includes various components including a controller (not illustrated) for controlling the cleaner 100, which are embedded in or mounted on the cleaner body 110. The cleaner body 110 may have therein a space formed to accommodate various components, which constitute the cleaner 100, therein.

The cleaner body 110 is configured to travel in one of an automatic mode and a manual mode depending on a user's selection. The cleaner body 110 may be provided with a mode selection input unit, through which a user selects one of the automatic mode and the manual mode. When the user selects the automatic mode using the mode selection input unit, the cleaner body 110 may travel autonomously like a robot cleaner. When the user selects the manual mode using the mode selection input unit, the cleaner body 110 may travel by being manually drawn or pushed by the user.

The cleaner body 110 is provided with a wheel unit 200 for allowing the cleaner body 110 to travel. The wheel unit 200 may include a motor (not illustrated) and at least one wheel, which is configured to be rotated by the torque of the motor. The rotational direction of the motor may be controlled by the controller (not illustrated), and the wheel of the wheel unit 200 may be rotated in one direction or the opposite direction depending on the rotational direction of the motor.

The wheel unit 200 may be provided at each of the left and right sides of the cleaner body 110. The cleaner body 110 may be moved or turned in all directions by the wheel unit 200.

Each wheel unit 200 may be configured to be operated independently. To this end, each wheel unit 200 may be individually operated by a corresponding motor.

The controller controls the operation of the wheel unit 200 so that the cleaner 100 can travel autonomously on an area to be cleaned.

The wheel unit 200 is provided at the lower side of the cleaner body 110 so as to drive the cleaner body 110. The wheel unit 200 may be constituted by circular wheels, may be constituted by circular rollers connected via a belt chain, or may be constituted by a combination of circular wheels and circular rollers connected via a belt chain. The wheel of the wheel unit 200 may be arranged such that the upper portion thereof is located inside the cleaner body 110 and the lower portion thereof is exposed downwards from the cleaner body 110. At least the lower portion of the wheel of the wheel unit 200 is maintained in contact with an area to be cleaned, e.g. a floor, thereby driving the cleaner body 110.

The wheel unit 200 may be mounted to each of the left and right sides of the cleaner body 110. The wheel unit 200 disposed at the left side of the cleaner body 110 and the wheel unit 200 disposed at the right side of the cleaner body 110 may be operated independently of each other. The wheel unit 200 disposed at the left side of the cleaner body 110 may be connected to a first drive motor via at least one first gear. The first gear may be rotated by the torque of the first drive motor, and the wheel unit 200 disposed at the left side of the cleaner body 110 may also be rotated along with the rotation of the first gear. The wheel unit 200 disposed at the right side of the cleaner body 110 may be connected to a second drive motor via at least one second gear. The second gear may be rotated by the torque of the second drive motor, and the wheel unit 200 disposed at the right side of the cleaner body 110 may also be rotated along with the rotation of the second gear.

The controller may control the rotational speed of a rotary shaft of each of the first drive motor and the second drive motor so as to determine the direction in which the cleaner body 110 travels. For example, when the controller performs control such that the rotary shaft of the first drive motor and the rotary shaft of the second drive motor are simultaneously rotated at the same rotational speed as each other, the cleaner body 110 may travel straight. When the controller performs control such that the rotary shaft of the first drive motor and the rotary shaft of the second drive motor are simultaneously rotated at different rotational speeds from each other, the cleaner body 110 may turn to the left or right. In order to make the cleaner body 110 turn to the left or right, the controller may operate one of the first drive motor and the second drive motor and may stop the operation of the other.

The cleaner 100 may further include a suspension unit, which may be mounted in the cleaner body 110. The suspension unit may include a coil spring. The suspension unit may serve to absorb shocks and vibrations, which are transmitted to the wheel unit 200 while the cleaner body 110 travels, using the elastic force of the coil spring.

In addition, the cleaner 100 may further include an ascending/descending unit, which is mounted to the suspension unit in order to adjust the height of the cleaner body 110. The ascending/descending unit may be mounted to the suspension unit so as to be movable upwards or downwards, and may be coupled to the cleaner body 110. Therefore, when the ascending/descending unit moves upwards in the suspension unit, the cleaner body 110 may also move upwards along with the ascending/descending unit, and when the ascending/descending unit moves downwards in the suspension unit, the cleaner body 110 may also move downwards along with the ascending/descending unit. The cleaner body 110 is moved upwards or downwards by the ascending/descending unit, whereby the height thereof is adjusted.

When the cleaner body 110 travels on a hard floor to clean the same, the wheel of the wheel unit 200 and the bottom of the cleaning nozzle 120 are maintained in close contact with the floor. However, when the cleaner body 110 travels on a carpet laid over the floor, the wheel of the wheel unit 200 may slip, and thus the traveling performance of the cleaner body 110 may be degraded. In addition, the cleaning nozzle 120 may draw the carpet with a certain suction force, and this suction force applied between the cleaning nozzle 120 and the carpet may degrade the traveling performance of the cleaner body 110.

In order to solve this problem, the ascending/descending unit adjusts the height of the cleaner body 110 depending on the slip rate of the wheel of the wheel unit 200, and consequently the degree of contact between the bottom of the cleaning nozzle 120 and an area to be cleaned can be adjusted. Accordingly, it is possible to maintain the traveling performance of the cleaner body 110 regardless of the material of the area to be cleaned.

As described above, the wheel of the wheel unit 200 disposed at the left side of the cleaner body 110 is connected to the first drive motor via the first gear, and the wheel of the wheel unit 200 disposed at the right side of the cleaner body 110 is connected to the second drive motor via the second gear. In this configuration, when the first drive motor and the second drive motor are stationary, the wheel of the wheel unit 200 disposed at each of the left and right sides of the cleaner body 110 is not allowed to rotate. In this state, the user cannot drive the cleaner body 110 in a manual mode. Therefore, when the cleaner body 110 is driven in the manual mode, the connection between the wheel of the wheel unit 200 disposed at each of the left and right sides of the cleaner body 110 and a corresponding one of the first and second drive motors should be released. To this end, the cleaner 100 may further include a clutch, which is provided inside the cleaner body 110 and which connects the wheel of the wheel unit 200 disposed at each of the left and right sides of the cleaner body 110 and a corresponding one of the first and second drive motors when the cleaner body 110 is driven in the automatic mode, and releases the connection between the wheel of the wheel unit 200 disposed at each of the left and right sides of the cleaner body 110 and a corresponding one of the first and second drive motors when the cleaner body 110 is driven in the manual mode.

The cleaner 100 may further include a battery (not illustrated), which is mounted to the cleaner body 110 in order to supply electrical power to electrical components of the cleaner 100. The battery may be configured to be rechargeable, and may be detachably mounted to the cleaner body 110.

A dust container accommodation unit 112 is provided in the cleaner body 110. The dust container 140, which separates foreign substances from the sucked air and collects the foreign substances therein, is detachably coupled to the dust container accommodation unit 112.

The dust container accommodation unit 112 may be formed to have a shape that is opened forwards and upwards from the cleaner body 110 and that is indented from the front side of the cleaner body 110 toward the rear side of the cleaner body 110. Alternatively, the dust container accommodation unit 112 may be formed in a shape in which the front side of the cleaner body 110 is opened forwards, upwards and downwards.

The dust container accommodation unit 112 may be formed at the other side of the cleaner body 110 (for example, the rear side of the cleaner body 110) depending on the kind of cleaner.

The dust container 140 is detachably coupled to the dust container accommodation unit 112. A portion of the dust container 140 may be accommodated in the dust container accommodation unit 112, and the remaining portion of the dust container 140 may be formed to protrude from the cleaner body 110 in the forward direction.

The dust container 140 includes an inlet 142, through which air containing foreign substances such as dust is introduced, and an outlet 143, through which air from which dust has been separated is discharged. When the dust container 140 is mounted in the dust container accommodation unit 112, the inlet 142 and the outlet 143 formed in the dust container 140 respectively communicate with a first opening 116 and a second opening 117 formed in an inner wall of the dust container accommodating unit 112.

An intake flow passage formed in the cleaner body 110 corresponds to a flow passage formed from the cleaning nozzle 120 to the first opening 116, and an exhaust flow passage formed in the cleaner body 110 corresponds to a flow passage formed from the second opening 117 to an exhaust port.

Due to this air flow connection relationship, air containing foreign substances, which is introduced through the cleaning nozzle 120, is introduced into the dust container 140 via the intake flow passage in the cleaner body 110, and the foreign substances are separated from the sucked air while passing through at least one filtering member (for example, a cyclone, a filter, etc.) provided in the dust container 140. The foreign substances are collected in the dust container 140, and the air is discharged from the dust container 140. The filtered air is discharged to the outside through the exhaust port after passing through the exhaust flow passage in the cleaner body 110.

The cleaner body 110 is provided with an upper cover 113, which is configured to cover the dust container 140 accommodated in the dust container accommodation unit 112. The upper cover 113 may be hinged to a portion of the cleaner body 110 so as to be rotatable. The upper cover 113 may cover the upper side of the dust container 140 by covering the opened upper side of the dust container accommodation unit 112. In addition, the upper cover 113 may be configured to be separable from the cleaner body 110.

In the state in which the upper cover 113 covers the dust container 140, the dust container 140 may be prevented from being separated from the dust container accommodation unit 112.

The upper cover 113 is provided at the upper side thereof with a handle 114. The handle 114 may be provided with an image-capturing unit 115. It is desirable for the image-capturing unit 115 to be arranged at an incline with respect to the bottom surface of the cleaner body 110 so as to capture an image of the surroundings ahead of and above the cleaner body 110.

The image-capturing unit 115 may be provided at the cleaner body 110, and may serve to capture an image for simultaneous localization and mapping (SLAM) of the cleaner. The image captured by the image-capturing unit 115 is used to generate a map of a traveling area or to detect the current position within the traveling area.

The image-capturing unit 115 may generate three-dimensional coordinate information related to the surroundings of the cleaner body 110. This image-capturing unit 115 may be a three-dimensional depth camera, which calculates the distance between the cleaner 100 and an object to be photographed. Accordingly, field data related to the three-dimensional coordinate information may be generated.

Specifically, the image-capturing unit 115 may capture a two-dimensional image related to the surroundings of the cleaner body 110, and may generate a plurality of pieces of three-dimensional coordinate information that corresponds to the captured two-dimensional image.

In one embodiment, the image-capturing unit 115 may include two or more cameras for capturing two-dimensional images, thereby forming a stereo vision system, in which two or more images captured by the two or more cameras are combined and three-dimensional coordinate information corresponding thereto is generated.

Specifically, the image-capturing unit 115 according to the embodiment may include a first pattern emission unit, which emits light in a first pattern in a forward-and-downward direction from the cleaner body, a second pattern emission unit, which emits light in a second pattern in a forward-and-upward direction from the cleaner body, and an image acquisition unit, which acquires an image of the surroundings ahead of the cleaner body. Accordingly, the image acquisition unit acquires an image of a region to which the light in the first pattern and the light in the second pattern are emitted.

In another embodiment, the image-capturing unit 115 may include a single camera and an infrared pattern projection unit for projecting an infrared pattern. In this case, the distance between the image-capturing unit 115 and an object to be photographed may be measured by capturing the shape of the infrared pattern projected on the object to be photographed from the infrared pattern projection unit. This image-capturing unit 115 may be an infrared (IR)-type image-capturing unit.

In a further embodiment, the image-capturing unit 115 may include a single camera and a light-emitting unit for emitting light. In this case, the distance between the image-capturing unit 115 and an object to be photographed may be measured by receiving a portion of a laser beam that is reflected from the object to be photographed after being emitted from the light-emitting unit and analyzing the received laser beam. This image-capturing unit 115 may be a time-of-flight (TOF)-type image-capturing unit.

Specifically, the image-capturing unit 115 may include a laser that is configured to emit a laser beam in at least one direction. For example, the image-capturing unit 115 may include a first laser and a second laser. The first laser may emit linear laser beams that intersect each other, and the second laser may emit a linear laser beam. In this case, the lowermost laser is used to sense an obstacle located at a relatively low position on an area to be cleaned, the uppermost laser is used to sense an obstacle located at a relatively high position, and the intermediate laser, which is disposed between the lowermost laser and the uppermost laser, is used to sense an obstacle located at an intermediate position.

The sensing unit 130 may be disposed at the lower side of the upper cover 113, and may be detachably coupled to the dust container 140.

The sensing unit 130 is disposed at the cleaner body 110, and detects information related to the surroundings of the cleaner body 110. The sensing unit 130 detects information related to the surroundings in order to generate field data.

The sensing unit 130 senses the surroundings (including obstacles) of the cleaner 100 in order to prevent the cleaner 100 from colliding with obstacles. The sensing unit 130 may detect information related to the surroundings of the cleaner 100. The sensing unit 130 may sense the presence of a user around the cleaner 100. The sensing unit 130 may sense the presence of objects around the cleaner 100.

In addition, in order to improve the sensing function and the traveling function of the cleaner, the sensing unit 130 is configured so as to turn in the horizontal direction (i.e. panning) and in the vertical direction (i.e. tilting).

The sensing unit 130 is disposed at the front side of the cleaner body 110 and between the dust container 140 and the upper cover 113. The sensing unit 130 includes a coupling protrusion 132d, which protrudes from the bottom surface of the sensing unit 130, and the dust container 140 includes a coupling recess 141, which is formed in the top surface of the dust container 140 and into which the coupling protrusion 132d of the sensing unit 130 is inserted and coupled. When the upper cover 113 covers the top of the dust container accommodation unit 112, the coupling protrusion 132d of the sensing unit 130 is inserted into the coupling recess 141 in the dust container 140. In this way, the dust container 140 is coupled to the sensing unit 130, with the result that the dust container 140 is prevented from being separated from the cleaner body 110. Conversely, when the upper cover 113 opens the top of the dust container accommodation unit 112, the coupling protrusion 132d of the sensing unit 130 escapes from the coupling recess 141 in the dust container 140. Accordingly, the coupling between the dust container 140 and the sensing unit 130 is released, and thus the dust container 140 becomes separable from the cleaner body 110.

The sensing unit 130 may include at least one of an external signal sensor, an obstacle sensor, a cliff sensor, a lower camera sensor, an upper camera sensor, an encoder, a shock sensor, or a microphone.

The external signal sensor may sense an external signal of the cleaner 100. The external signal sensor may be, for example, an infrared ray sensor, an ultrasonic sensor, a radio frequency (RF) sensor, or the like. Accordingly, field data related to an external signal may be generated.

The cleaner 100 may receive a guide signal generated from the charging stand using the external signal sensor, and may detect information related to the location thereof and the direction to the charging stand. The charging stand may transmit a guide signal for indicating the direction and distance, based on which the cleaner 100 can return to the charging stand. That is, the cleaner 100 determines the current location thereof and the direction to the charging stand by receiving a signal transmitted from the charging stand, and returns to the charging stand.

The obstacle sensor may sense an obstacle present ahead of the cleaner. Accordingly, field data related to an obstacle may be generated.

The obstacle sensor may transmit field data, which is generated by sensing an object present in a region toward which the cleaner 100 is directed, to the controller. That is, the obstacle sensor may sense a protrusion, domestic items, furniture, a wall surface, a wall corner, etc. that are present in a path through which the cleaner 100 moves, and may transmit related field data to the controller.

The obstacle sensor may be, for example, an infrared ray sensor, an ultrasonic sensor, an RF sensor, a geomagnetic sensor, or the like. The cleaner 100 may use one type of sensor as the obstacle sensor, or may use two or more types of sensors in combination as the obstacle sensor as needed.

The cliff sensor may primarily use various types of optical sensors, and may sense an obstacle, which is present in an area to be cleaned on which the cleaner body 110 is supported. Accordingly, field data related to an obstacle present in an area to be cleaned may be generated.

The cliff sensor may be, for example, an infrared ray sensor including a light-emitting unit and a light-receiving unit, an ultrasonic sensor, an RF sensor, a position-sensitive detector (PSD) sensor, or the like, like the obstacle sensor.

For example, the cliff sensor may be a PSD sensor. However, the cliff sensor may be configured as different types of sensors. The PSD sensor may include a light-emitting unit, which emits an infrared ray toward an obstacle, and a light-receiving unit, which receives an infrared ray that is reflected and returns from the obstacle, and may be typically configured in a modular form. In the case in which an obstacle is sensed by a PSD sensor, it is possible to obtain a stable measurement value irrespective of a difference in the reflectance or in the color of an obstacle.

The controller measures an angle of an infrared ray between a light emission signal generated when the cliff sensor emits an infrared ray toward the surface of an area to be cleaned and a reflection signal generated when the cliff sensor receives an infrared ray reflected from an obstacle, thereby sensing the presence of a cliff and obtaining field data related to the depth of the cliff.

The lower camera sensor obtains image information (field data) about the surface of an area to be cleaned while the cleaner 100 is moving. The lower camera sensor is alternatively referred to using the term "optical flow sensor". The lower camera sensor may convert a lower-side image, which is received from an image sensor provided inside the sensor, and may generate predetermined type of image data (field data). As such, field data related to the image recognized through the lower camera sensor may be generated.

The controller may detect a location of the cleaner using the lower camera sensor regardless of slippage of the cleaner. The controller may compare and analyze image data captured by the lower camera sensor over time, may calculate a moving distance and a moving direction thereof, and consequently may calculate a location of the cleaner.

The cliff sensor may also sense the material of an area to be cleaned. The cliff sensor may sense the amount of light reflected (reflectance) from the area to be cleaned, and the controller may determine the material of the area to be cleaned based on the sensed reflectance. For example, in the case in which the material of the area to be cleaned is stone, e.g. marble, which has high reflectance, the cliff sensor may sense a relatively large amount of reflected light (high reflectance), and in the case in which the material of the area to be cleaned is wood, oilpaper, or textile (e.g. carpet), which has lower reflectance than marble, the cliff sensor may sense a relatively small amount of reflected light (low reflectance). As such, the controller may determine the material of the area to be cleaned using the reflectance of the area to be cleaned that is sensed by the cliff sensor. If the reflectance of the area to be cleaned is a predetermined value, the controller may determine that the area to be cleaned is a carpet.

In addition, the cliff sensor may sense the distance to the area to be cleaned, and the controller may determine the material of the area to be cleaned based on the sensed distance to the area to be cleaned. For example, when the cleaner is located on a carpet laid over a floor, the distance to the area to be cleaned, i.e. the carpet, which is sensed by the cliff sensor, may be shorter than when the cleaner is located on a floor on which no carpet is laid. As such, the controller may determine the material of the area to be cleaned using the distance to the area to be cleaned that is sensed by the cliff sensor. If the distance to the area to be cleaned is a predetermined value or less, the controller may determine that the area to be cleaned is a carpet.

Various sensors, e.g. a camera sensor, a current sensor, etc., other than the cliff sensor, may be used as the sensor for sensing the state of the area to be cleaned.

The camera sensor may capture an image of the area to be cleaned, and the controller may determine the material of the area to be cleaned by analyzing the image captured by the camera sensor. Images of various materials may be stored in the controller in advance, and when the image captured by the camera sensor corresponds to one of the images stored in the controller, the controller may determine the material of the area to be cleaned to be a material in the corresponding image. If the image captured by the camera sensor coincides with an image of a carpet stored in the controller, the controller may determine that the area to be cleaned is a carpet.

The current sensor may sense a current resistance value of the wheel drive motor, and the controller may determine the material of the area to be cleaned based on the current resistance value sensed by the current sensor. For example, when the cleaning nozzle 120 is located on a carpet laid over a floor, fibers of the carpet may be drawn into the suction port by the suction force of the cleaning nozzle 120, and this suction force applied between the carpet and the suction port may prevent the cleaner from traveling smoothly. At this time, current resistance may be generated due to a load between a rotor and a stator of the wheel drive motor. The current sensor may sense the current resistance value that is generated in the wheel drive motor, and the controller may determine the material of the area to be cleaned based on the current resistance value. If the current resistance value is a predetermined value or more, the controller may determine that the area to be cleaned is a carpet.

The upper camera sensor may be mounted so as to be oriented in an upward direction or a forward direction from the cleaner 100, and may capture an image of the surroundings of the cleaner 100. In the case in which the cleaner 100 is provided with a plurality of upper camera sensors, the camera sensors may be arranged on the top surface or the side surface of the cleaner at regular intervals or angles. Field data related to the image recognized through the upper camera sensor may be generated.

The encoder may detect information related to the operation of the motor for operating the wheel of the wheel unit 200. Accordingly, field data related to the operation of the motor may be generated.

The shock sensor may sense shocks generated when the cleaner 100 collides with an external obstacle or the like. Accordingly, field data related to the external shocks may be generated.

The microphone may sense an external sound. Accordingly, field data related to the external sound may be generated.

In this embodiment, the sensing unit 130 includes an image sensor. In this embodiment, the field data is image information acquired by the image sensor or feature point information extracted from the image information. However, the present invention is not limited thereto.

An adapter 118 may be disposed at the opened lower side of the dust container accommodation unit 112. The adapter 118 is coupled to the cleaner body 110 so as to constitute a part of the cleaner body 110. That is, in the state in which the adapter 118 is coupled to the cleaner body 110, the adapter 118 may be considered to be a part of the cleaner body 110. The dust container 140, in which foreign substances are stored, may be seated on the adapter 118. The adapter 118 may serve to interconnect the cleaner body 110 and the cleaning nozzle 120. The adapter 118 may interconnect an intake flow passage in the cleaner body 110 and an intake flow passage in the cleaning nozzle 120.

The cleaning nozzle 120 is configured to suck air containing foreign substances such as dust or to wipe the area to be cleaned. The cleaning nozzle 120 for sucking air containing foreign substances may be referred to as a suction module, and the cleaning nozzle 120 for wiping the area to be cleaned may be referred to as a mop module.

The cleaning nozzle 120 may be detachably coupled to the cleaner body 110. If the suction module is separated from the cleaner body 110, the mop module may be detachably coupled to the cleaner body 110 instead of the separated suction module. Therefore, when the user wants to remove foreign substances such as dust from the area to be cleaned, the user may install the suction module to the cleaner body 110, and when the user wants to wipe the area to be cleaned, the user may install the mop module to the cleaner body 110.

The cleaning nozzle 120 may be configured to perform both the function of sucking air containing foreign substances such as dust and the function of wiping the area to be cleaned after the suction.

The cleaning nozzle 120 may be disposed at the lower side of the cleaner body 110. Alternatively, as illustrated, the cleaning nozzle 120 may be disposed so as to protrude from a portion of the cleaner body 110. The portion of the cleaner body 110 from which the cleaning nozzle 120 protrudes may be a portion of the cleaner body 110 that is oriented in the direction in which the cleaner body 110 advances, i.e. the front side of the cleaner body 110. The cleaning nozzle 120 may be disposed at a position further forward than the wheel unit 200 so that a portion thereof may protrude forward from the dust container 140.

As illustrated, the cleaning nozzle 120 protrudes in the forward direction, the leftward direction and the rightward direction from a portion of the cleaner body 110. Specifically, the front end of the cleaning nozzle 120 is located at a position spaced apart from the portion of the cleaner body 110 in the forward direction, and the left and right sides of the cleaning nozzle 120 are respectively located at positions spaced apart from the portion of the cleaner body 110 in the leftward and rightward directions.

A suction motor may be mounted inside the cleaner body 110. An impeller (not illustrated) may be coupled to a rotary shaft of the suction motor. When the suction motor is operated and the impeller is rotated along with the rotation of the rotary shaft, the impeller may generate suction force.

An intake flow passage may be formed inside the cleaner body 110. Foreign substances such as dust may be introduced into the cleaning nozzle 120 from the area to be cleaned by the suction force generated by the drive force of the suction motor, and the foreign substances introduced into the cleaning nozzle 120 may be introduced into the intake flow passage.

In the case in which the cleaner body 110 travels in the automatic mode, the cleaning nozzle 120 may perform cleaning on the area to be cleaned, e.g. a floor. The cleaning nozzle 120 may be disposed at a portion of the front side of the cleaner body 110 that is adjacent to the floor. The cleaning nozzle 120 may have a suction port, which is formed at the bottom surface of the cleaning nozzle 120 in order to suck air thereinto. The suction port may be formed so as to be oriented toward the floor when the cleaning nozzle 120 is coupled to the cleaner body 110.

The cleaning nozzle 120 may be coupled to the cleaner body 110 via the adapter 118. The cleaning nozzle 120 may communicate with the intake flow passage in the cleaner body 110 via the adapter 118. The cleaning nozzle 120 may be disposed at a position further downward than the dust container 140 disposed at the front side of the cleaner body 110.

The cleaning nozzle 120 may include a case, which has a suction port formed at the bottom surface thereof. A brush unit may be rotatably provided inside the case. The case may provide an empty space in which the brush unit is rotatably provided. The brush unit may include a rotary shaft, which extends in the lateral direction, and a brush, which protrudes from the outer circumferential surface of the rotary shaft. The rotary shaft of the brush unit may be rotatably coupled to the left side and the right side of the case.

The case of the cleaning nozzle 120 may include a center case 121 and side cases 122, which are disposed at the left and right sides of the center case 121 in order to form the left surface and the right surface of the cleaning nozzle 120. The suction port may be formed at the bottom surface of the center case 121. The center case 121 may have open left and right sides, and the side cases 122 may be coupled to the open left and right sides of the center case 121 and may shield the same.

The brush unit may be disposed such that the brush is exposed downwards through the suction port formed at the bottom surface of the case. Accordingly, when the suction motor is operated, the brush is rotated by the suction force and sweeps foreign substances such as dust up from the area to be cleaned, e.g. a floor. The swept-up foreign substances are sucked into the case by the suction force. To this end, the brush may be made of a material in which frictional electricity is not generated in order to prevent foreign substances from easily adhering to the brush.

The adapter 118 may be coupled to the front side of the cleaner body 110. The adapter 118 may interconnect the cleaner body 110 and the cleaning nozzle 120. The cleaning nozzle 120 may be detachably coupled to the adapter 118. The adapter 118 may support the lower side of the dust container 140.

The dust container 140 may be detachably coupled to the front side of the cleaner body 110, and the lower side thereof may be supported by the adapter 118. The dust container 140 may include a case, which has a hollow cylindrical shape. A filtering unit, which separates foreign substances from the air sucked through the intake flow passage in the cleaner body 110, may be disposed inside the cylindrical-shaped case. The filtering unit may include a plurality of cyclones. The foreign substances, such as dust, filtered by the filtering unit, may drop into the dust container 140, and may be contained in the dust container 140. Only air may escape out of the dust container 140, may be moved toward the suction motor by the suction force of the suction motor, and may finally be discharged outside the cleaner body 110.

The dust container 140 may have an open lower surface, and the open lower surface of the dust container 140 may be shielded by a lid 145. The lid 145 may be rotatably coupled at a portion thereof to the dust container 140 in order to open or close the dust container 140. When the lid 145 is opened, the open lower surface of the dust container 140 may be exposed, and the foreign substances contained in the dust container 140 may drop through the open lower surface of the dust container 140. A user can throw away the foreign substances contained in the dust container 140 by separating the dust container 140 from the cleaner body 110 and opening the lid 145. In the state in which the dust container 140 is coupled to the cleaner body 110, the dust container 140 is seated on the adapter 118. That is, the lid of the dust container 140 is seated on the adapter 118.

As described above, when the cleaner body 110 travels on the area to be cleaned, e.g. a floor, in the automatic mode, the cleaning nozzle 120 may perform cleaning automatically while closely contacting the floor. However, when the user wants to perform cleaning manually, the user may select the manual mode using the mode selection input unit provided at the cleaner body 110, may separate the cleaning nozzle 120 from the cleaner body 110, and may couple a manual cleaning nozzle to the cleaner body 110, thereby performing cleaning manually. The manual cleaning nozzle may include a long bellows-type hose. In this case, a portion of the hose of the manual cleaning nozzle may be connected to the cleaner body 110.

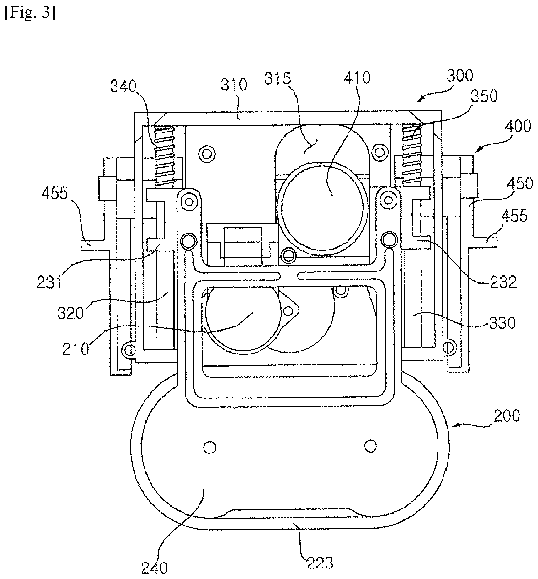

As described above, the cleaner according to the embodiment of the present invention may include the suspension unit for absorbing shocks applied to the wheel unit 200 and the ascending/descending unit for adjusting the height of the cleaner body 110. In order to enable the suspension unit to continuously absorb shocks applied to the wheel unit 200 even while the ascending/descending unit adjusts the height of the cleaner body 110, the ascending/descending unit is mounted to the suspension unit so as to be movable vertically, and is coupled to the cleaner body 110. A detailed description of this configuration will now be made with reference to FIGs. 3 to 7.

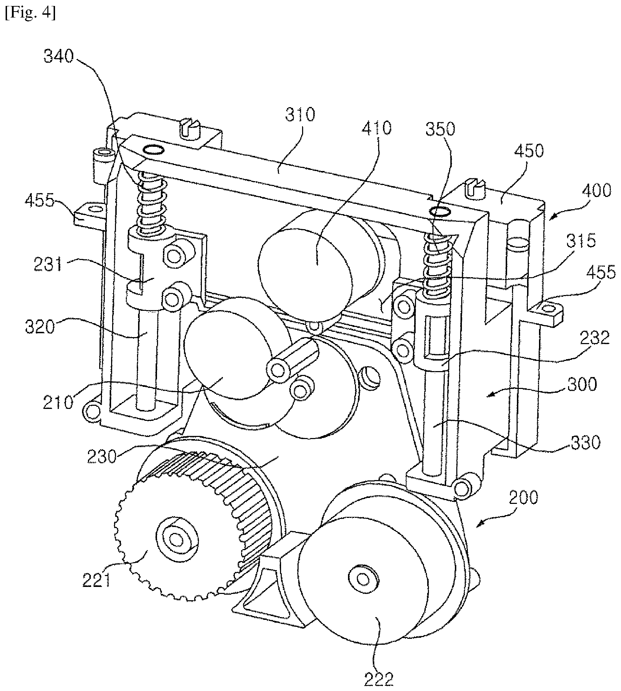

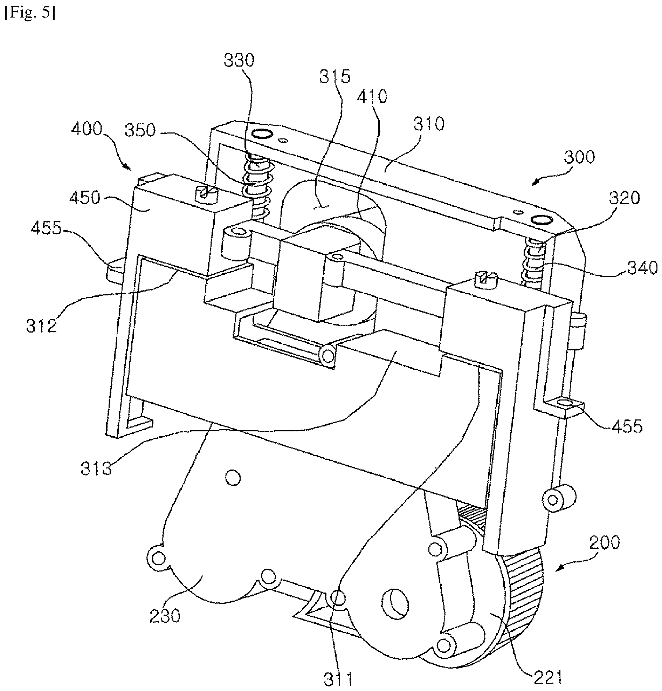

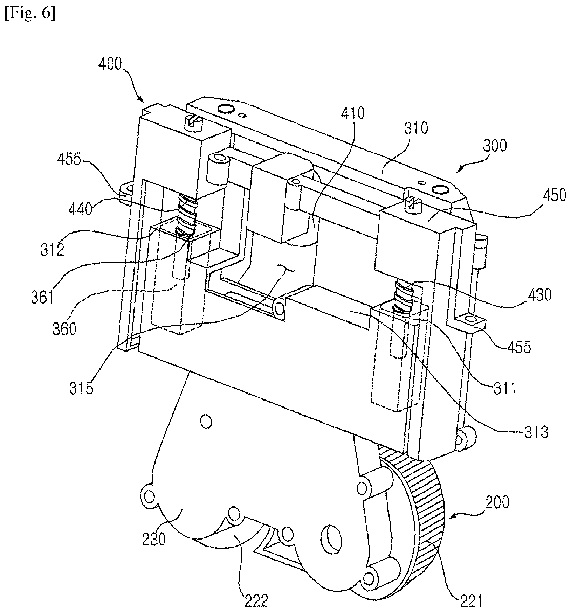

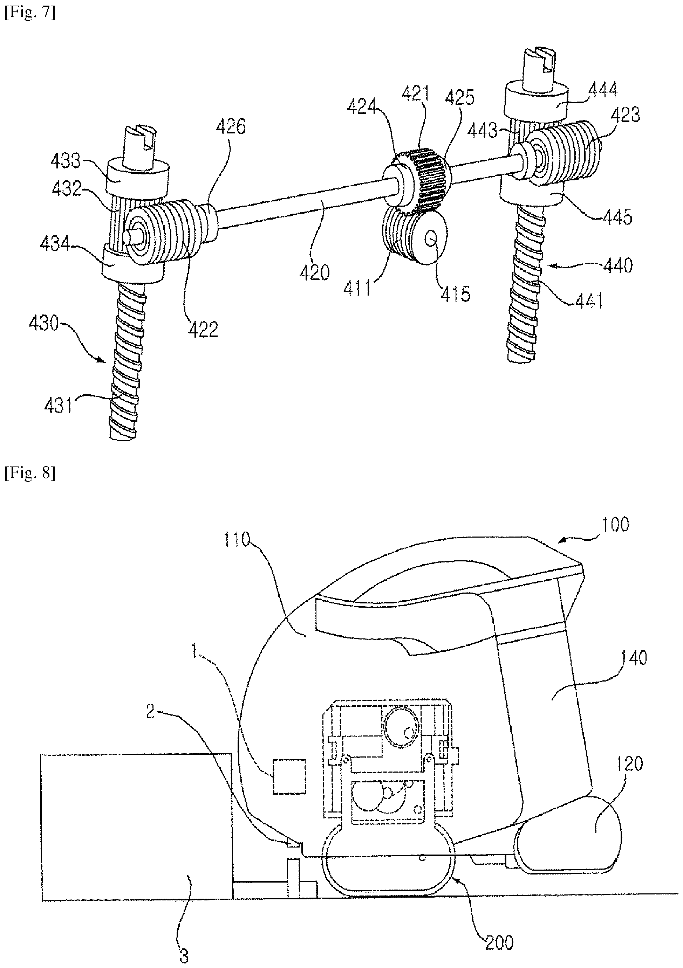

FIG. 3 is a front view illustrating the wheel unit depicted in FIGs. 1 and 2, the suspension unit coupled to the wheel unit, and the ascending/descending unit mounted to the suspension unit. FIG. 4 is a front perspective view of FIG. 3, from which a wheel cover and a travel belt are removed. FIG. 5 is a rear perspective view of FIG. 4, which illustrates the state in which the ascending/descending unit is moved to the lowermost position. FIG. 6 is a rear perspective view of FIG. 4, which illustrates the state in which the ascending/descending unit is moved to the uppermost position. FIG. 7 is a view illustrating the configuration of an ascending/descending housing depicted in FIGs. 3 to 6.

Referring to FIGs. 3 to 7, the cleaner 100 according to the present invention includes the wheel unit 200, the suspension unit 300, and the ascending/descending unit 400. The wheel unit 200 and the suspension unit 300 may be coupled to each other so as to constitute a drive unit 200 and 300. In other words, the drive unit 200 and 300 may include the wheel unit 200 and the suspension unit 300. The wheel unit 200 is disposed outside the cleaner body 110. The suspension unit 300 is disposed at a position further inward than the wheel unit 200. The ascending/descending unit 400 is disposed at a position further inward than the suspension unit 300. That is, the wheel unit 200, the suspension unit 300 and the ascending/descending unit 400 are arranged from the outside of the cleaner body 110 in the inward direction of the cleaner body 110 in that order. The ascending/descending unit 400 may be coupled to the cleaner body 110, the suspension unit 300 may be coupled to the ascending/descending unit 400 in a suspended manner, and the wheel unit 200 may be coupled to the suspension unit 300 in a suspended manner. The wheel unit 200 may be mounted to one surface, e.g. the outer surface, of the suspension unit 300 so as to be movable vertically, and the ascending/descending unit 400 may be mounted to the opposite surface, e.g. the inner surface, of the suspension unit 300 so as to be ascendable and descendable.

The wheel unit 200 is mounted to each of the left and right sides of the cleaner body 110 so that the cleaner body 110 can travel. The wheel unit 200 includes a travel drive motor 210, at least one wheel 221 and 222, which is configured to be rotated by the torque of the travel drive motor 210 to drive the cleaner body 110, and a gear housing 230, to which the travel drive motor 210 and the wheel 221 and 222 are mounted. The travel drive motor 210 may be fixed to the outer side of the gear housing 230. A rotary shaft of the travel drive motor 210 may be inserted from the outside of the gear housing 230 into the gear housing 230.

The at least one wheel 221 and 222 may support the cleaner body 110 so that the cleaner body 110 is movable on the area to be cleaned. In this embodiment, the wheel 221 and 222 includes a drive wheel 221, which is disposed at the front side of the gear housing 230, and a driven wheel 222, which is disposed so as to be spaced apart from the drive wheel 221 in the backward direction. The drive wheel 221 and the driven wheel 222 may be connected to each other via a travel belt 223. The drive wheel 221 includes a plurality of protrusions, which are formed on the outer circumferential surface of the drive wheel 221 and are arranged in the circumferential direction of the drive wheel 221. The travel belt 223 includes a plurality of recesses, which are formed in the inner circumferential surface of the travel belt 223 so as to allow the protrusions formed on the outer circumferential surface of the drive wheel 221 to be inserted thereinto. Due to the coupling structure in which the protrusions are inserted into the recesses, when the drive wheel 221 rotates, the travel belt 223 is rotated without slipping, and consequently the driven wheel 222 is rotated.

The wheel unit 200 may further include a plurality of gears (not illustrated), which are disposed inside the gear housing 230 to connect the rotary shaft of the travel drive motor 210 and the drive wheel 221. In this case, the torque of the travel drive motor 210 rotates the gears disposed inside the gear housing 230, and the drive wheel 221, the travel belt 223 and the driven wheel 222 are rotated sequentially. A wheel cover 240 may be coupled to the gear housing 230 to shield the drive wheel 221 and the driven wheel 222. The drive wheel 221 and the driven wheel 222 may be disposed between the gear housing 230 and the wheel cover 240. One end of each of the drive wheel 221 and the driven wheel 222 may be rotatably coupled to the gear housing 230, and the other end of each of the drive wheel 221 and the driven wheel 222 may be rotatably coupled to the wheel cover 240.

The main feature of the cleaner 100 according to the embodiment of the present invention is to adjust the height of the cleaner body 110. Therefore, the wheel unit 200 is merely configured to allow the cleaner body 110 to travel and to be mounted to the suspension unit 300 so as to be movable vertically. That is, the wheel unit 200 may be formed in any of various configurations, as long as the wheel unit 200 includes at least one of a wheel or a belt, which is directly supported by the area to be cleaned, e.g. a floor, and is rotated, and as long as the wheel unit 200 is mounted to the suspension unit 300 so as to be movable vertically.

The suspension unit 300 absorbs shocks transmitted from the wheel unit 200 while the cleaner body 110 travels. The suspension unit 300 includes a suspension frame 310, guide bars 320 and 330, and elastic members 340 and 350.

The gear housing 230 includes bar-mounting portions 231 and 232, which are mounted to the guide bars 320 and 330 of the suspension unit 300 so as to be movable vertically. Since the bar-mounting portions 231 and 232 are mounted to the guide bars 320 and 330 so as to be movable vertically, the wheel unit 200 is mounted to the suspension unit 300 so as to be movable vertically. The guide bars 320 and 330 penetrate the bar-mounting portions 231 and 232 vertically. The bar-mounting portions 231 and 232 have therein through-holes that the guide bars 320 and 330 penetrate vertically. Each of the bar-mounting portions 231 and 232 is formed at a respective one of the front side and the rear side of the gear housing 230. That is, the bar-mounting portions 231 and 232 include a front bar-mounting portion 231, which is disposed at the front side of the gear housing 230, and a rear bar-mounting portion 232, which is disposed at the rear side of the gear housing 230. The guide bars 320 and 330 of the suspension unit 300 are two in number, namely, a front guide bar 320, which is disposed at the front side of the suspension unit 300, and a rear guide bar 330, which is disposed at the rear side of the suspension unit 300. The front bar-mounting portion 231 is mounted to the front guide bar 320 so as to be movable vertically, and the rear bar-mounting portion 232 is mounted to the rear guide bar 330 so as to be movable vertically.

The guide bars 320 and 330 are mounted to the outer surface of the suspension frame 310 so as to extend vertically. The front guide bar 320 is disposed at the front side of the outer surface of the suspension frame 310, and the rear guide bar 330 is disposed at the rear side of the outer surface of the suspension frame 310.

The elastic members 340 and 350 are configured as coil springs, through which the guide bars 320 and 330 pass vertically. The upper ends of the elastic members 340 and 350 are supported by the suspension frame 310, and the lower ends of the elastic members 340 and 350 are supported by the bar-mounting portions 231 and 232. If shocks are applied to the cleaner body 110 or to the wheel unit 200 while the cleaner body 110 travels, the elastic members 340 and 350 absorb the shocks by being compressed. Since the bar-mounting portions 231 and 232 of the wheel unit 200 are movably mounted to the guide bars 320 and 330 so as to support the lower sides of the elastic members 340 and 350, the suspension unit 300 absorbs shocks when the wheel unit 200 moves vertically. The elastic members 340 and 350 include a front elastic member 340, through which the front guide bar 320 passes vertically and the lower end of which is supported by the front bar-mounting portion, and a rear elastic member 350, through which the rear guide bar 330 passes vertically and the lower end of which is supported by the rear bar-mounting portion.

The ascending/descending unit 400 may be coupled to the cleaner body 110. The ascending/descending unit 400 may be configured to ascend or descend together with the cleaner body 110, and may be mounted to the drive unit 200 and 300 so as to be ascendable and descendable. The ascending/descending unit 400 may be mounted to the suspension unit 300 of the drive unit 200 and 300 so as to be ascendable and descendable. The cleaner body 110 ascends or descends along with the vertical movement of the ascending/descending unit 400, with the result that the height of the cleaner body 110 is adjusted.

The ascending/descending unit 400 may include an ascending/descending drive motor 410, a first rotary bar 420, and a second rotary bar 430 and 440. The first rotary bar 420 may be rotated by the torque of the ascending/descending drive motor 410. The second rotary bar 430 and 440 may be arranged perpendicular to the first rotary bar 420. The first rotary bar 420 may be arranged so as to extend horizontally, specifically, in the forward-and-backward direction, and the second rotary bar 430 and 440 may be arranged so as to extend vertically. The second rotary bar 430 and 440 may be rotated by the rotational force of the first rotary bar 420, and may be mounted to the suspension unit 300 so that the cleaner body 110 ascends or descends along with the rotation of the second rotary bar 430 and 440.

The second rotary bar 430 and 440 may be provided in a plural number, and the plurality of second rotary bars 430 and 440 may be arranged parallel to each other. In this embodiment, the second rotary bars 430 and 440 are two in number, which includes a second front rotary bar 430, which is disposed at the front side of the first rotary bar 420, and a second rear rotary bar 440, which is disposed at the rear side of the first rotary bar 420. The second front rotary bar 430 is gear-meshed with the front end of the first rotary bar 420, and the second rear rotary bar 440 is gear-meshed with the rear end of the first rotary bar 420.

The ascending/descending unit 400 may further include an ascending/descending housing 450. The first rotary bar 420 and the second rotary bars 430 and 440 are rotatably mounted in the ascending/descending housing 450. The ascending/descending housing 450 is provided at each of the front side and the rear side thereof with a coupling portion 455, which is coupled to the cleaner body 110. The coupling portion 455 has therein a fastening hole, which penetrates the coupling portion 455 vertically. A bolt passes through the fastening hole, and is fastened to the cleaner body 110, whereby the coupling portion 455 is coupled to the cleaner body 110.

The ascending/descending housing 450 may be coupled to the cleaner body 110 so as to ascend or descend together with the second rotary bars 430 and 440. That is, when the second rotary bars 430 and 440 ascend or descend, the ascending/descending housing 450 ascends or descends together with the second rotary bars 430 and 440, thereby adjusting the height of the cleaner body 110.

The ascending/descending drive motor 410 may be coupled to the outer surface of the ascending/descending housing 450. The rotary shaft of the ascending/descending drive motor 410 may be inserted from the outside of the ascending/descending housing 450 into the ascending/descending housing 450. A first worm 411, which is coupled to the rotary shaft 415 of the ascending/descending drive motor 410, may be disposed inside the ascending/descending housing 450.

The ascending/descending drive motor 410 is not coupled to the center in the forward-and-backward direction of the ascending/descending housing 450, but is disposed at a position biased toward one side (the rear side) in the forward-and-backward direction. The reason for this is to prevent the ascending/descending drive motor 410 from interfering with the travel drive motor 210 when the ascending/ descending unit 400 moves downwards. The travel drive motor 210 is not coupled to the center in the forward-and-backward direction of the gear housing 230, but is disposed at a position biased toward the opposite side (the front side) in the forward-and-backward direction. Therefore, when the ascending/descending unit 400 moves downwards, the ascending/descending drive motor 410, which is disposed at a position biased toward the one side in the forward-and-backward direction, is prevented from interfering with the travel drive motor 210. As a result, it is possible to secure space for mounting the ascending/descending unit 400 in the cleaner body 110.

The ascending/descending drive motor 410 is mounted to a portion of the outer surface of the ascending/descending housing 450 that faces the suspension frame 310. The suspension frame 310 has therein an ascending/descending hole 315, into which the ascending/descending drive motor 410 is inserted. The ascending/descending hole 315 is formed to have a sufficient vertical length so that the ascending/descending drive motor 410 ascends or descends within the ascending/descending hole 315 when the ascending/descending unit 400 ascends or descends.

The ascending/descending unit 400 may be mounted to the inner surface of the suspension frame 310, i.e. to the surface of the suspension frame 310 that faces the interior of the cleaner body 110, so as to be movable vertically. The suspension frame 310 may have stepped portions 311, 312 and 313, which are formed such that the lower portion of the inner surface of the suspension frame 310 protrudes further than the upper portion thereof. The stepped portions 311, 312 and 313 are formed from the front end of the inner surface of the suspension frame 310 to the rear end thereof, and include a front stepped portion 311, which is located at the front side, a rear stepped portion 312, which is located at the rear side, and a middle stepped portion 313, which interconnects the front stepped portion 311 and the rear stepped portion 312. The front stepped portion 311 and the rear stepped portion 312 may be formed to have the same height, which may be greater than the height of the middle stepped portion 313. The ascending/descending hole 315 may be formed from the upper portion of the suspension frame 310 to the middle stepped portion 313. The ascending/descending unit 400 may be mounted to the front stepped portion 311 and the rear stepped portion 312 so as to be movable vertically. When the ascending/descending housing 450 of the ascending/descending unit 400 descends, it may be seated on the front stepped portion 311 and the rear stepped portion 312. When the ascending/descending housing 450 descends and is seated on the front stepped portion 311 and the rear stepped portion 312, it surrounds both sides of the protruding lower portion of the suspension frame 310. Therefore, the ascending/descending housing 450 of the ascending/descending unit 400 may overlap the suspension frame 310. In addition, when the ascending/descending unit 400 is mounted to the suspension unit 300, the overall widths of the ascending/descending unit 400 and the suspension unit 300 are decreased, thereby securing space for disposing the ascending/descending unit 400 in the cleaner body 110.

The entire portion of the first rotary bar 420 is accommodated in the ascending/descending housing 450. However, only portions of the second rotary bars 430 and 440 are accommodated in the ascending/descending housing 450. One end portions of the second rotary bars 430 and 440 protrude from the inside of the ascending/descending housing 450 to the outside of the ascending/descending housing 450, and are mounted via insertion into the suspension unit 300. The lower end portions of the second rotary bars 430 and 440 protrude from the inside of the ascending/descending housing 450 to the lower outside of the ascending/descending housing 450, and are mounted via insertion from the top surfaces of the stepped portions 311, 312 and 313 of the suspension frame 310 into the stepped portions 311, 312 and 313. The portion of the ascending/descending housing 450, through which the second rotary bars 430 and 440 protrude to the outside of the ascending/descending housing 450, may be seated on the stepped portions 311, 312 and 313 when the ascending/descending unit 400 descends. The portion of the ascending/descending housing 450, through which the second rotary bars 430 and 440 protrude to the outside of the ascending/descending housing 450, may be seated on the front stepped portion 311 and the rear stepped portion 312 when the ascending/descending unit 400 descends.

The suspension unit 300 has therein insertion holes 361, into which the one end portions of the second rotary bars 430 and 440 are mounted via insertion. The insertion holes 361 may be formed in the stepped portions 311, 312 and 313 of the suspension frame 310. The insertion holes 361 may be formed in the front stepped portion 311 and the rear stepped portion 312 of the suspension frame 310. Insulators 360, in which the insertion holes 361 are formed, may be coupled via insertion into the stepped portions 311 and 312 of the suspension frame 310. The insertion holes 361 have threads (not illustrated) formed in the inner circumferential surfaces thereof, and the second rotary bars 430 and 440 have threads 431 and 441 formed in the outer circumferential surfaces of the one end portions thereof that protrude to the outside of the ascending/ descending housing 450 so as to mesh with the threads formed in the inner circumferential surfaces of the insertion holes 361. Therefore, when the second rotary bars 430 and 440 rotate in one direction, the second rotary bars 430 and 440 protrude from the stepped portions 311 and 312, and consequently the ascending/descending unit 400 ascends. Conversely, when the second rotary bars 430 and 440 rotate in the opposite direction, the second rotary bars 430 and 440 are inserted into the stepped portions 311 and 312, and consequently the ascending/descending unit 400 descends. The suspension frame 310 is formed of a plastic material, whereas the second rotary bars 430 and 440 are formed of stainless steel. Therefore, in order to allow the suspension frame 310 to be moved vertically without being worn by the threads 431 and 441 when the second rotary bars 430 and 440 rotate, the insulators 360 are formed of the same material as the second rotary bars 430 and 440, i.e. stainless steel.

The ascending/descending unit 400 may further include a first worm 411, a first worm wheel 421, second worms 422 and 423, and second worm wheels 432 and 443.

The first worm 411 may be disposed at the rotary shaft of the ascending/descending drive motor 410, and may be located inside the ascending/descending housing 450.

The first worm wheel 421 may be disposed at the first rotary bar 420, and may be located inside the ascending/descending housing 450. Because the ascending/descending drive motor 410 is coupled to the ascending/descending housing 450 at a position biased toward the one side in the forward-and-backward direction, the first worm wheel 421 is not disposed at the center in the longitudinal direction of the first rotary bar 420, but is disposed at a position biased toward the one side in the same manner as the ascending/descending drive motor 410. The first worm wheel 421 may be tooth-engaged with the first worm 411. Since the first worm 411 and the first worm wheel 421 are tooth-engaged with each other, when the rotary shaft of the ascending/ descending drive motor 410 rotates, the first rotary bar 420 may be rotated together with the rotary shaft of the ascending/descending drive motor 410.

The second worms 422 and 423 are disposed at the first rotary bar 420, and are located inside the ascending/descending housing 450. When the first rotary bar 420 is rotated, the second worms 422 and 423 are rotated together with the first rotary bar 420. Because the second rotary bars 430 and 440 include two rotary bars, namely, the second front rotary bar 430 and the second rear rotary bar 440, the second worms 422 and 423 include two worms, each of which is disposed at a respective one of the two end portions of the first rotary bar 420. That is, the second worms 422 and 423 include a second front worm 422, which is disposed at the front end portion of the first rotary bar 420, and a second rear worm 423, which is disposed at the rear end portion of the first rotary bar 420.

The second worm wheels 432 and 443 are disposed at the second rotary bars 430 and 440, and are located inside the ascending/descending housing 450. Because the lower end portions of the second rotary bars 430 and 440 protrude to the lower outside of the ascending/descending housing 450 and are mounted via insertion into the insertion holes 361 in the suspension frame 310, the second worm wheels 432 and 443 are disposed at the upper end portions of the second rotary bars 430 and 440. The second worm wheels 432 and 443 are tooth-engaged with the second worms 422 and 423. The second worm wheels 432 and 443 include a second front worm wheel 432, which is disposed at the second front rotary bar 430, and a second rear worm wheel 443, which is disposed at the second rear rotary bar 440. The second front worm wheel 432 is tooth-engaged with the second front worm 422, and the second rear worm wheel 443 is tooth-engaged with the second rear worm 423. Since the second worms 422 and 423 and the second worm wheels 432 and 443 are tooth-engaged with each other, when the first rotary bar 420 is rotated, the second rotary bars 430 and 440 are rotated together with the first rotary bar 420. That is, when the rotary shaft of the ascending/descending drive motor 410 rotates, the first rotary bar 420 and the second rotary bars 430 and 440 are rotated together with the rotary shaft of the ascending/descending drive motor 410. When the rotary shaft of the ascending/descending drive motor 410 rotates in one direction, the first rotary bar 420 and the second rotary bars 430 and 440 are rotated in the one direction. When the rotary shaft of the ascending/descending drive motor 410 rotates in the opposite direction, the first rotary bar 420 and the second rotary bars 430 and 440 are rotated in the opposite direction.

The first worm wheel 421, the second worms 422 and 423 and the first rotary bar 420 are not formed separately from each other. The first worm wheel 421 and the second worms 422 and 423 may be formed integrally with the first rotary bar 420. At this time, the first worm wheel 421, the second worms 422 and 423 and the first rotary bar 420 may be integrally formed of stainless steel. Alternatively, the first worm wheel 421 and the second worms 422 and 423 may be formed separately from the first rotary bar 420, and may be coupled to the first rotary bar 420. In other words, the first worm wheel 421 and the second worms 422 and 423 may be formed integrally with the first rotary bar 420, or may be formed separately from the first rotary bar 420. Therefore, the term "disposed" was used above to describe the relationship of the first worm wheel 421 and the second worms 422 and 423 with respect to the first rotary bar 420.

The second worm wheels 432 and 443 and the second rotary bars 430 and 440 are not formed separately from each other. The second worm wheels 432 and 443 may be formed integrally with the second rotary bars 430 and 440. The threads 431 and 441, which are formed in the lower end portions of the second rotary bars 430 and 440, may also be formed integrally with the second rotary bars 430 and 440. The second front worm wheel 432, the threads 431 and the second front rotary bar 430 may be integrally formed of stainless steel. The second rear worm wheel 443, the threads 441 and the second rear rotary bar 440 may be integrally formed of stainless steel. Alternatively, the second worm wheels 432 and 443 and the threads 431 and 441 may be formed separately from the second rotary bars 430 and 440, and may be coupled to the second rotary bars 430 and 440. In other words, the second worm wheels 432 and 443 and the threads 431 and 441 may be formed integrally with the second rotary bars 430 and 440, or may be formed separately from the second rotary bars 430 and 440. Therefore, the term "disposed" was used above to describe the relationship of the second worm wheels 432 and 443 with respect to the second rotary bars 430 and 440.

The ascending/descending unit 400 may further include a plurality of bearings 424, 425, 426, 427, 433, 434, 444 and 445, which allow the first rotary bar 420 and the second rotary bars 430 and 440 to be rotatably coupled to the ascending/descending housing 450. The bearings 424, 425, 426, 427, 433, 434, 444 and 445 are coupled to the heaviest portion of each of the first rotary bar 420 and the second rotary bars 430 and 440 in order to ensure smooth rotation of the first rotary bar 420 and the second rotary bars 430 and 440. Therefore, the bearings 424, 425, 426, 427, 433, 434, 444 and 445 may be coupled to portions of the first rotary bar 420 that are adjacent to the first worm wheel 421 and the second worms 422 and 423 and to portions of the second rotary bars 430 and 440 that are adjacent to the second worm wheels 432 and 443.

The bearings 424, 425, 426, 427, 433, 434, 444 and 445 include a first bearing 424, which is coupled to a portion of the first rotary bar 420 that is adjacent to the front end of the first worm wheel 421, a second bearing 425, which is coupled to a portion of the first rotary bar 420 that is adjacent to the rear end of the first worm wheel 421, a third bearing 426, which is coupled to a portion of the first rotary bar 420 that is adjacent to the rear end of the second front worm 422, a fourth bearing 427, which is coupled to a portion of the first rotary bar 420 that is adjacent to the front end of the second rear worm 423, a fifth bearing 433, which is coupled to a portion of the second front rotary bar 430 that is adjacent to the upper end of the second front worm wheel 432, a sixth bearing 434, which is coupled to a portion of the second front rotary bar 430 that is adjacent to the lower end of the second front worm wheel 432, a seventh bearing 444, which is coupled to a portion of the second rear rotary bar 440 that is adjacent to the upper end of the second rear worm wheel 443, and an eighth bearing 445, which is coupled to a portion of the second rear rotary bar 440 that is adjacent to the lower end of the second rear worm wheel 443.

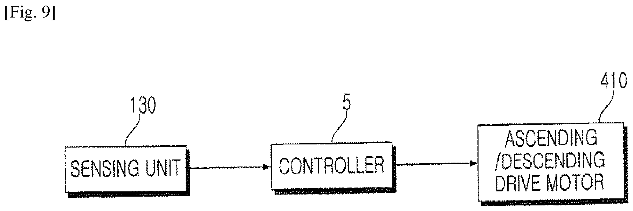

FIG. 8 is a view illustrating the state in which the cleaner according to the embodiment of the present invention is docked with an external docking device, and FIG. 9 is a control block diagram of the cleaner according to the embodiment of the present invention.

Referring to FIGs. 8 and 9, the cleaner 100 according to the embodiment of the present invention includes a battery 1, which is provided inside the cleaner body 110. The battery 1 stores electrical energy for driving various electrical components provided at the cleaner body 110. A charging terminal 2 for charging the battery 1 is disposed on the bottom surface of the cleaner body 110. The charging terminal 2 may have a predetermined configuration enabling connection to an external docking device 3 for charging. The charging terminal 2 may be connected to a supply terminal 4 provided at the external docking device 3 in order to charge the battery 1. The docking device 3 may be a charging stand. When the state of charge of the battery 1 drops below a predetermined level, the cleaner 100 may travel autonomously to the docking device 3, and the cleaner body 110 may be docked with the docking device 3. When the cleaner 100 finishes the cleaning operation, the cleaner 100 may travel autonomously to the docking device 3, and the cleaner body 110 may be docked with the docking device 3.

The sensing unit 130 may include at least one of an obstacle sensor, a floor sensor, or a position sensor. The controller 5 may perform control in response to the sensed values transmitted from the sensing unit 130 so that the ascending/descending unit 400 ascends or descends.

For example, the controller 5 may receive information related to the location of the docking device 3 from the sensing unit 130 in order to verify the location of the docking device 3. Due to the configuration in which the charging terminal 2 is disposed on the bottom surface of the cleaner body 110, when the cleaner body 110 intends to be docked with the docking device 3, the controller 5 performs control such that the ascending/descending drive motor 410 is rotated in one direction and the ascending/descending unit 400 ascends, whereby the cleaner body 110 is moved upwards. After the ascending/descending unit 400 ascends, the controller 5 performs control such that the ascending/descending drive motor 410 is rotated in the opposite direction and the ascending/descending unit 400 descends, whereby the cleaner body 110 is moved downwards and the charging terminal 2 is connected to the supply terminal 4 of the docking device 3.

The cleaning nozzle 120 includes a suction port, which is formed at the bottom surface of the cleaning nozzle 120 in order to suck foreign substances from an area to be cleaned. For example, when the cleaner 100 travels on a carpet laid over a floor, fibers of the carpet may be drawn into the suction port by the suction force of the cleaning nozzle 120, and this suction force applied between the carpet and the suction port may degrade the traveling performance of the cleaner. Therefore, the cleaner 100 according to the embodiment of the present invention is capable of moving the ascending/descending unit 400 upwards or downwards by controlling the ascending/ descending drive motor 410 depending on the material of the area to be cleaned, thereby adjusting the height of the cleaning nozzle 120. The sensing unit 130 may acquire information related to the material of the area to be cleaned, and the controller 5 may receive the information about the area to be cleaned from the sensing unit 130. The sensing unit 130 may be at least one of a distance sensor, a reflectance measuring sensor, or an image sensor, which acquires information related to the material of the area to be cleaned. Upon determining that the area to be cleaned is a carpet based on the information about the area to be cleaned transmitted from the sensing unit 130, the controller 5 performs control such that the ascending/descending drive motor 410 is rotated in one direction and the ascending/descending unit 400 ascends, whereby the cleaning nozzle 120 is moved upwards. Upon determining that the cleaner body 110 has left the carpet based on the information about the area to be cleaned, the controller 5 performs control such that the ascending/descending drive motor 410 is rotated in the opposite direction and the ascending/descending unit 400 descends, whereby the cleaning nozzle 120 is moved downwards.

As described above, the cleaner according to the embodiment of the present invention is configured such that the ascending/descending unit 400 for moving the cleaner body 110 upwards or downwards is mounted to the suspension unit 300. Therefore, even when the height of the cleaner body 110 is adjusted by the ascending/ descending unit 400, the suspension unit 300 is capable of continuously absorbing shocks applied to the wheel unit 200.

In addition, the suspension frame 310 of the suspension unit 300 includes the stepped portions 311, 312 and 313, on which the ascending/descending housing 450 of the ascending/descending unit 400 is seated when the ascending/descending unit 400 descends. Therefore, when the ascending/descending unit 400 is mounted to the suspension unit 300, the overall widths of the ascending/descending unit 400 and the suspension unit 300 are decreased, thereby securing space for disposing the ascending/ descending unit 400 in the cleaner body 110.

As is apparent from the above description, the present invention provides a cleaner in which an ascending/descending unit for moving a cleaner body upwards or downwards is mounted to a suspension unit. Therefore, even when the height of the cleaner body is adjusted by the ascending/descending unit, the suspension unit is capable of continuously absorbing shocks applied to a wheel unit.

In addition, when a cleaning nozzle sucks foreign substances from a carpet, the height of the cleaning nozzle is increased, thereby preventing fibers of the carpet from being drawn into a suction port formed at the bottom surface of the cleaning nozzle and consequently preventing degradation of the traveling performance of the cleaner body.

In addition, when the cleaner intends to be docked with an external docking device in order to charge a battery, the cleaner body is moved upwards so that a charging terminal provided at the bottom surface of the cleaner body is located at a position enabling connection to the docking device.

In addition, a suspension frame of the suspension unit includes stepped portions, on which an ascending/descending housing of the ascending/descending unit is seated when the ascending/descending unit descends. Therefore, when the ascending/descending unit is mounted to the suspension unit, the overall widths of the ascending/descending unit and the suspension unit are decreased, thereby securing space for disposing the ascending/descending unit in the cleaner body.

Although the preferred embodiments of the present invention have been disclosed for illustrative purposes, those skilled in the art will appreciate that various modifications, additions and substitutions are possible, without departing from the scope of the invention as defined by the accompanying claims.

## Claims

1. A cleaner comprising:
a cleaner body (110);
a wheel unit (200) comprising a wheel configured to support the cleaner body (110) so that the cleaner body (110) travels on an area to be cleaned;
a suspension unit (300), to which the wheel unit (200) is mounted so as to be movable vertically, the suspension unit (300) being configured to absorb shocks when the wheel unit (200) moves vertically; and
an ascending/descending unit (400) mounted to the suspension unit (300) so as to be ascendable and descendable and coupled to the cleaner body (110) so as to ascend or descend together with the cleaner body (110),
**characterized in that**:
the ascending/descending unit (400) comprises:
an ascending/descending drive motor (410);
a first rotary bar (420) configured to be rotated by torque of the ascending/descending drive motor (410); and
at least one second rotary bar (430, 440) arranged perpendicular to the first rotary bar (420) so as to be rotated by rotational force of the first rotary bar (420), the second rotary bar (430, 440) being mounted to the suspension unit (300) so that the cleaner body (110) ascends or descends along with rotation of the second rotary bar (430, 440).

2. The cleaner according to claim 1, wherein the ascending/descending unit (400) further comprises an ascending/descending housing (450) in which the first rotary bar (420) and the second rotary bar (430, 440) are rotatably mounted, the ascending/descending housing (450) being coupled to the cleaner body (110) so as to ascend or descend together with the second rotary bar (430, 440).

3. The cleaner according to claim 2, wherein the first rotary bar (420) is accommodated in the ascending/descending housing (450), and
wherein the second rotary bar (430, 440) has one end portion protruding from an inside of the ascending/descending housing (450) to an outside of the ascending/descending housing (450) and inserted into the suspension unit (300).

4. The cleaner according to claim 3, wherein the suspension unit (300) has therein an insertion hole (361), into which the one end portion of the second rotary bar (430, 440) is mounted via insertion, and threads formed in an inner circumferential surface of the insertion hole (361), and
wherein the second rotary bar (430, 440) has threads (431, 441) formed in an outer circumferential surface of the one end portion of the second rotary bar (430, 440) so as to be meshed with the threads formed in the insertion hole (361).

5. The cleaner according to claim 4, wherein the suspension unit (300) comprises:
a suspension frame (310);
a guide bar (320, 330) mounted to the suspension frame (310) so as to extend vertically, the wheel unit (200) being mounted to the guide bar (320, 330) so as to be movable vertically; and
an elastic member (340, 350) through which the guide bar (320, 330) passes, the elastic member (340, 350) being configured to absorb shocks when the wheel unit (200) moves vertically,
wherein the insertion hole (361) is formed in the suspension frame (310).

6. The cleaner according to claim 5, wherein the suspension frame (310) has therein an ascending/descending hole (315) into which the ascending/descending drive motor (410) is inserted, and
wherein the ascending/descending drive motor (410) is disposed outside the ascending/descending housing (450), and ascends or descends within the ascending/descending hole (315) when the ascending/descending unit (400) ascends or descends.

7. The cleaner according to claim 5, wherein the suspension frame (310) has a stepped portion formed such that a lower portion of a surface of the suspension frame (310) that faces an interior of the cleaner body (110) protrudes further than an upper portion thereof, and
wherein a portion of the ascending/descending housing (450), through which the second rotary bar (430, 440) protrudes to the outside of the ascending/descending housing (450), is seated on the stepped portion when the ascending/descending unit (400) descends.

8. The cleaner according to claim 1, wherein the ascending/descending unit (400) further comprises:
a first worm (411) disposed at a rotary shaft of the ascending/descending drive motor (410);
a first worm wheel (421) disposed at the first rotary bar (420), the first worm wheel (421) being tooth-engaged with the first worm (411);
a second worm (422, 423) disposed at the first rotary bar (420); and
a second worm wheel (432, 443) disposed at the second rotary bar (430, 440), the second worm wheel (432, 443) being tooth-engaged with the second worm (422, 423).

9. The cleaner according to claim 8, wherein the first worm wheel (421) and the second worm (422, 423) are formed integrally with the first rotary bar (420), or
wherein the second worm wheel (432, 443) is formed integrally with the second rotary bar (430, 440).

10. The cleaner according to claim 1, wherein the at least one second rotary bar (430, 440) comprises a plurality of second rotary bars (430, 440), and wherein the second rotary bars (430, 440) are arranged parallel to each other, or
wherein the first rotary bar (420) is arranged in a horizontal direction, and wherein the second rotary bar (430, 440) is arranged in a vertical direction.

11. The cleaner according to claim 1, further comprising:
a sensing unit (130) comprising at least one of an obstacle sensor, a floor sensor, or a position sensor; and
a controller (5) configured to perform control in response to sensed values transmitted from the sensing unit (130) so that the ascending/descending unit (400) ascends or descends.

12. The cleaner according to claim 11, further comprising:
a charging terminal (2) having a predetermined configuration enabling connection to an external docking device for charging, the charging terminal (2) being disposed on a bottom surface of the cleaner body (110),
wherein, when the cleaner body (110) intends to be docked with the docking device, the controller (5) performs control such that the ascending/descending unit (400) ascends so that the cleaner body (110) is moved upwards.

13. The cleaner according to claim 12, wherein, after the ascending/descending unit (400) ascends, the controller (5) performs control such that the ascending/descending unit (400) descends so that the cleaner body (110) is moved downwards and the charging terminal (2) is connected to the docking device.

14. The cleaner according to claim 13, further comprising:
a cleaning nozzle (120) coupled to the cleaner body (110), the cleaning nozzle (120) having a suction port formed in a bottom surface thereof to suck foreign substances from an area to be cleaned,
wherein, upon determining that the area to be cleaned is a carpet based on information about the area to be cleaned sensed by the floor sensor, the controller performs control such that the ascending/descending unit (400) ascends so that the cleaning nozzle (120) is moved upwards.

## Patentansprüche

1. Reiniger, der aufweist:
einen Reinigerkörper (110);
eine Radeinheit (200), die ein Rad aufweist, das so konfiguriert ist, dass es den Reinigerkörper (110) trägt, so dass der Reinigerkörper (110) auf einem zu reinigenden Bereich fährt;
eine Aufhängungseinheit (300), an der die Radeinheit (200) so angebracht ist, dass sie vertikal beweglich ist, wobei die Aufhängungseinheit (300) konfiguriert ist, Stöße zu absorbieren, wenn sich die Radeinheit (200) vertikal bewegt; und
eine Aufwärts-/Abwärtsbewegungs-Einheit (400), die an der Aufhängungseinheit (300) so angebracht ist, dass sie aufwärts- und abwärtsbeweglich ist, und die mit dem Reinigerkörper (110) gekoppelt ist, um sich zusammen mit dem Reinigerkörper (110) aufwärts und abwärts zu bewegen,
**dadurch gekennzeichnet, dass**:
die Aufwärts-/Abwärtsbewegungs-Einheit (400) aufweist:
einen Aufwärts-/Abwärtsbewegungs-Antriebsmotor (410);
eine erste Drehstange (420), die konfiguriert ist, durch das Drehmoment des Aufwärts-/Abwärtsbewegungs-Antriebsmotors (410) gedreht zu werden; und
mindestens eine zweite Drehstange (430, 440), die senkrecht zur ersten Drehstange (420) angeordnet ist, so dass sie durch die Drehkraft der ersten Drehstange (420) gedreht wird, wobei die zweite Drehstange (430, 440) an der Aufhängungseinheit (300) angebracht ist, so dass sich der Reinigerkörper (110) zusammen mit der Drehung der zweiten Drehstange (430, 440) aufwärts- oder abwärtsbewegt.

2. Reiniger nach Anspruch 1, wobei die Aufwärts-/Abwärtsbewegungs-Einheit (400) ferner ein Aufwärts-/Abwärtsbewegungs-Gehäuse (450) aufweist, in dem die erste Drehstange (420) und die zweite Drehstange (430, 440) drehbar montiert sind, wobei das Aufwärts-/Abwärtsbewegungs-Gehäuse (450) mit dem Reinigerkörper (110) gekoppelt ist, um zusammen mit der zweiten Drehstange (430, 440) auf oder abwärts zu bewegen.

3. Reiniger nach Anspruch 2, wobei die erste Drehstange (420) in dem Aufwärts-/Abwärtsbewegungs-Gehäuse (450) untergebracht ist und
wobei die zweite Drehstange (430, 440) einen Endabschnitt aufweist, der von einer Innenseite des Aufwärts-/Abwärtsbewegungs-Gehäuses (450) zu einer Außenseite des Aufwärts-/Abwärtsbewegungs-Gehäuses (450) vorsteht und in die Aufhängungseinheit (300) eingesetzt ist.

4. Reiniger nach Anspruch 3, wobei die Aufhängungseinheit (300) darin ein Einsatzloch (361), in das der eine Endabschnitt der zweiten Drehstange (430, 440) durch Einsetzen montiert wird, und Gewindegänge aufweist, die in einer Innenumfangsfläche des Einführlochs (361) ausgebildet sind, und
wobei die zweite Drehstange (430, 440) Gewindegänge (431, 441) aufweist, die in einer Außenumfangsfläche des einen Endabschnitts der zweiten Drehstange (430, 440) ausgebildet sind, so um mit den in dem Einsatzloch (361) ausgebildeten Gewindegängen in Eingriff gebracht zu werden.

5. Reiniger nach Anspruch 4, wobei die Aufhängungseinheit (300) aufweist:
einen Aufhängungsrahmen (310);
eine Führungsstange (320, 330), die so an dem Aufhängungsrahmen (310) angebracht ist, dass sie sich vertikal erstreckt, wobei die Radeinheit (200) so an der Führungsstange (320, 330) angebracht ist, dass sie vertikal beweglich ist; und
ein elastisches Element (340, 350), durch das die Führungsstange (320, 330) hindurchgeht, wobei das elastische Element (340, 350) konfiguriert ist, Stöße zu absorbieren, wenn sich die Radeinheit (200) vertikal bewegt,
wobei das Einsatzloch (361) in dem Aufhängungsrahmen (310) ausgebildet ist.

6. Reiniger nach Anspruch 5, wobei der Aufhängungsrahmen (310) darin ein Aufwärts-/Abwärtsbewegungs-Loch (315) aufweist, in das der Aufwärts-/Abwärtsbewegungs-Antriebsmotor (410) eingesetzt ist, und
wobei der Aufwärts-/Abwärtsbewegungs-Antriebsmotor (410) außerhalb des Aufwärts-/Abwärtsbewegungs-Gehäuses (450) angeordnet ist und sich innerhalb des Aufwärts-/Abwärtsbewegungs-Lochs (315) aufwärts- oder abwärtsbewegt, wenn sich die Aufwärts-/Abwärtsbewegungs-Einheit (400) aufwärts- oder abwärtsbewegt.

7. Reiniger nach Anspruch 5, wobei der Aufhängungsrahmen (310) einen abgestuften Abschnitt aufweist, der so ausgebildet ist, dass ein unterer Abschnitt einer Oberfläche des Aufhängungsrahmens (310), der einem Inneren des Reinigerkörpers (110) zugewandt ist, weiter vorsteht als ein oberer Abschnitt davon, und
wobei ein Abschnitt des Aufwärts-/Abwärtsbewegungs-Gehäuses (450), durch den die zweite Drehstange (430, 440) zur Außenseite des Aufwärts-/Abwärtsbewegungs-Gehäuses (450) vorsteht, auf dem abgestuften Abschnitt sitzt, wenn sich die Aufwärts-/Abwärtsbewegungs-Einheit (400) abwärts bewegt.

8. Reiniger nach Anspruch 1, wobei die Aufwärts-/Abwärtsbewegungs-Einheit (400) ferner aufweist:
eine erste Schnecke (411), die an einer Drehwelle des Aufwärts-/Abwärtsbewegungs-Antriebsmotors (410) angeordnet ist;
ein erstes Schneckenrad (421), das an der ersten Drehstange (420) angeordnet ist, wobei das erste Schneckenrad (421) mit der ersten Schnecke (411) in Zahneingriff steht;
eine zweite Schnecke (422, 423), die an der ersten Drehstange (420) angeordnet ist; und
ein zweites Schneckenrad (432, 443), das an der zweiten Drehstange (430, 440) angeordnet ist, wobei das zweite Schneckenrad (432, 443) mit der zweiten Schnecke (422, 423) in Zahneingriff steht.

9. Reiniger nach Anspruch 8, wobei das erste Schneckenrad (421) und die zweite Schnecke (422, 423) integral mit der ersten Drehstange (420) ausgebildet sind, oder
wobei das zweite Schneckenrad (432, 443) integral mit der zweiten Drehstange (430, 440) ausgebildet ist.

10. Reiniger nach Anspruch 1, wobei die mindestens eine zweite Drehstange (430, 440) mehrere zweite Drehstangen (430, 440) aufweist und wobei die zweiten Drehstangen (430, 440) parallel zueinander angeordnet sind, oder
wobei die erste Drehstange (420) in einer horizontalen Richtung angeordnet ist und wobei die zweite Drehstange (430, 440) in einer vertikalen Richtung angeordnet ist.

11. Reiniger nach Anspruch 1, der ferner aufweist:
eine Erfassungseinheit (130), die mindestens einen eines Hindernissensors, eines Bodensensors oder eines Positionssensors aufweist; und
eine Steuerung (5), die konfiguriert ist, eine Steuerung als Reaktion auf erfasste Werte durchführt, die von der Erfassungseinheit (130) übertragen werden, so dass sich die Aufwärts-/Abwärtsbewegungs-Einheit (400) aufwärts- oder abwärtsbewegt.

12. Reiniger nach Anspruch 11, der ferner aufweist:
einen Ladeanschluss (2) mit einer vorbestimmten Konfiguration, die eine Verbindung mit einer externen Andockvorrichtung zum Laden ermöglicht, wobei der Ladeanschluss (2) auf einer Bodenfläche des Reinigerkörper (110) angeordnet ist,
wobei, wenn der Reinigerkörper (110) an die Andockvorrichtung angedockt werden soll, die Steuerung (5) eine Steuerung durchführt, so dass sich die Aufwärts-/Abwärtsbewegungs-Einheit (400) aufwärtsbewegt, so dass der Reinigerkörper (110) nach oben bewegt wird.

13. Reiniger nach Anspruch 12, wobei die Steuerung (5), nachdem sich die Aufwärts-/Abwärtsbewegungs-Einheit (400) aufwärtsbewegt, eine Steuerung durchführt, so dass sich die Aufwärts-/Abwärtsbewegungs-Einheit (400) abwärtsbewegt, so dass der Reinigerkörper (110) nach unten bewegt wird und die Ladestation (2) mit der Andockvorrichtung verbunden wird.

14. Reiniger nach Anspruch 13, der ferner aufweist:
eine Reinigungsdüse (120), die mit dem Reinigerkörper (110) gekoppelt ist, wobei die Reinigungsdüse (120) eine Saugöffnung aufweist, die in einer Bodenfläche davon ausgebildet ist, um Fremdstoffe aus einem zu reinigenden Bereich anzusaugen,
wobei, wenn basierend auf von dem Bodensensor erfassten Informationen über den zu reinigenden Bereich festgestellt wird, dass es sich bei dem zu reinigenden Bereich um einen Teppich handelt, die Steuerung eine Steuerung durchführt, so dass sich die Aufwärts-/Abwärtsbewegungs-Einheit (400) aufwärtsbewegt, so dass die Reinigungsdüse (120) nach oben bewegt wird.

## Revendications

1. Appareil de nettoyage, comprenant :
un corps d'appareil de nettoyage (110) ;
une unité de roue (200) comprenant une roue prévue pour supporter le corps d'appareil de nettoyage (110) afin que ledit corps d'appareil de nettoyage (110) se déplace sur une zone à nettoyer ;
une unité de suspension (300), sur laquelle l'unité de roue (200) est montée de manière à pouvoir être mobile verticalement, ladite unité de suspension (300) étant prévue pour absorber les chocs lorsque l'unité de roue (200) se déplace verticalement ; et
une unité de montée/descente (400) montée sur l'unité de suspension (300) de manière à pouvoir monter et descendre, et raccordée au corps d'appareil de nettoyage (110) de manière à monter ou descendre avec le corps d'appareil de nettoyage (110),
**caractérisé en ce que** :
l'unité de montée/descente (400) comprend :
un moteur d'entraînement de montée/descente (410) ;
une première barre rotative (420) prévue pour être mise en rotation par le couple du moteur d'entraînement de montée/descente (410) ; et
au moins une deuxième barre rotative (430, 440) disposée perpendiculairement à la première barre rotative (420) de manière à être entraînée en rotation par la force de rotation de la première barre rotative (420), la deuxième barre rotative (430, 440) étant montée sur l'unité de suspension (300) de sorte que le corps d'appareil de nettoyage (110) monte ou descende solidairement à la rotation de la deuxième barre rotative (430, 440).

2. Appareil de nettoyage selon la revendication 1, où l'unité de montée/descente (400) comprend en outre un boîtier de montée/descente (450) où la première barre rotative (420) et la deuxième barre rotative (430, 440) sont montées de manière rotative, ledit boîtier de montée/descente (450) étant raccordé au corps d'appareil de nettoyage (110) de manière à monter ou à descendre avec la deuxième barre rotative (430, 440).

3. Appareil de nettoyage selon la revendication 2, où la première barre rotative (420) est logée dans le boîtier de montée/descente (450), et.
où la deuxième barre rotative (430, 440) a une partie d'extrémité faisant saillie depuis l'intérieur du boîtier de montée/descente (450) vers l'extérieur du boîtier de montée/descente (450) et insérée dans l'unité de suspension (300).

4. Appareil de nettoyage selon la revendication 3, où l'unité de suspension (300) présente un trou d'insertion (361) où la partie d'extrémité de la deuxième barre rotative (430, 440) est montée par insertion, et des filets formés dans une surface circonférentielle intérieure du trou d'insertion (361), et
où la deuxième barre rotative (430, 440) a des filets (431, 441) formés dans une surface circonférentielle extérieure de la partie d'extrémité de ladite deuxième barre rotative (430, 440) de manière à être engrenés avec les filets formés dans le trou d'insertion (361).

5. Appareil de nettoyage selon la revendication 4, où l'unité de suspension (300) comprend :
un cadre de suspension (310) ;
une barre de guidage (320, 330) montée sur le cadre de suspension (310) de manière à s'étendre verticalement, l'unité de roue (200) étant montée sur la barre de guidage (320, 330) de manière à être mobile verticalement ; et
un élément élastique (340, 350) que traverse la barre de guidage (320, 330), ledit élément élastique (340, 350) étant prévu pour absorber les chocs lorsque l'unité de roue (200) se déplace verticalement,
où le trou d'insertion (361) est formé dans le cadre de suspension (310).

6. Appareil de nettoyage selon la revendication 5, où le cadre de suspension (310) comprend un trou de montée/descente (315) où le moteur d'entraînement de montée/descente (410) est inséré, et
où le moteur d'entraînement de montée/descente (410) est disposé à l'extérieur du boîtier de montée/descente (450) et monte ou descend dans le trou de montée/descente (315) lorsque l'unité de montée/descente (400) monte ou descend.

7. Appareil de nettoyage selon la revendication 5, où le cadre de suspension (310) présente une partie d'étagement formée de sorte qu'une partie inférieure d'une surface du cadre de suspension (310) opposée à l'intérieur du corps d'appareil de nettoyage (110) fait saillie plus loin qu'une partie supérieure de celui-ci, et
où une partie du boîtier de montée/descente (450), à travers laquelle la deuxième barre rotative (430, 440) fait saillie vers l'extérieur du boîtier de montée/descente (450) repose sur la partie d'étagement lorsque l'unité de montée/descente (400) descend.

8. Appareil de nettoyage selon la revendication 1, où l'unité de montée/descente (400) comprend en outre :
une première vis sans fin (411) disposée sur un arbre rotatif du moteur d'entraînement de montée/descente (410) ;
une première roue à vis sans fin (421) disposée sur la première barre rotative (420), ladite première roue à vis sans fin (421) étant engrenée avec la première vis sans fin (411) ;
une deuxième vis sans fin (422, 423) disposée sur la première barre rotative (420) ; et
une deuxième roue à vis sans fin (432, 443) disposée sur la deuxième barre rotative (430, 440), ladite deuxième roue à vis sans fin (432, 443) étant engrenée avec la deuxième vis sans fin (422, 423).

9. Appareil de nettoyage selon la revendication 8, où la première roue à vis sans fin (421) et la deuxième vis sans fin (422, 423) sont formées d'un seul tenant avec la première barre rotative (420), ou.
où la deuxième roue à vis sans fin (432, 443) est formée d'un seul tenant avec la deuxième barre rotative (430, 440).

10. Appareil de nettoyage selon la revendication 1, où ladite au moins une deuxième barre rotative (430, 440) comprend une pluralité de deuxièmes barres rotatives (430, 440), et où les deuxièmes barres rotatives (430, 440) sont disposées parallèlement les unes aux autres, ou
où la première barre rotative (420) est disposée dans la direction horizontale, et la deuxième barre rotative (430, 440) est disposée dans la direction verticale.

11. Appareil de nettoyage selon la revendication 1, comprenant en outre :
une unité de détection (130) comprenant au moins un capteur d'obstacle, un capteur de sol ou un capteur de position ; et
un contrôleur (5) prévu pour exécuter une commande en réaction aux valeurs détectées transmises par l'unité de détection (130) afin que l'unité de montée/descente (400) monte ou descende.

12. Appareil de nettoyage selon la revendication 11, comprenant en outre :
une borne de charge (2) ayant une configuration prédéterminée permettant une connexion pour charge à un dispositif d'accueil extérieur, ladite borne de charge (2) étant disposée sur une surface inférieure du corps d'appareil de nettoyage (110),
où, lorsque le corps d'appareil de nettoyage (110) est destiné à être accouplé au dispositif d'accueil, le contrôleur (5) exécute une commande afin que l'unité de montée/descente (400) monte, de manière à déplacer vers le haut le corps d'appareil de nettoyage (110).

13. Appareil de nettoyage selon la revendication 12, où, après montée de l'unité de montée/descente (400), le contrôleur (5) exécute une commande afin que l'unité de montée/descente (400) descende, de manière à déplacer vers le bas le corps d'appareil de nettoyage (110) et à connecter la borne de charge (2) au dispositif d'accueil.

14. Appareil de nettoyage selon la revendication 13, comprenant en outre :
une buse de nettoyage (120) raccordée au corps d'appareil de nettoyage (110), ladite buse de nettoyage (120) ayant un orifice d'aspiration formé dans sa surface inférieure pour aspirer les matières étrangères d'une zone à nettoyer,
où, après avoir déterminé que la zone à nettoyer est un tapis sur la base d'informations sur la zone à nettoyer détectées par le capteur de sol, le contrôleur exécute une commande afin que l'unité de montée/descente (400) monte, de manière à déplacer la buse de nettoyage (120) vers le haut.
